# EUROPEAN PATENT APPLICATION

(11) **EP 4 618 453 A1**
(43) Date of publication of application: **17.09.2025**
(21) Application number: 23902802.0
(22) Date of filing: 14.12.2023
(51) Int. Cl.: H04L 1/00, H04W 52/02, H04W 28/06

(54) **COMMUNICATION METHOD AND APPARATUS**

(30) Priority: 14.12.2022 CN 202211611815
(71) Applicant: Huawei Technologies Co., Ltd., Shenzhen, Guangdong 518129 (CN)
(72) Inventor: YU, Jian, Shenzhen, Guangdong 518129 (CN); GAN, Ming, Shenzhen, Guangdong 518129 (CN)
(74) Representative: Pfenning, Meinig & Partner mbB
(86) International application number: PCT/CN2023/138861
(87) International publication number: WO 2024/125609

(57) **Abstract**

A communication method and apparatus are disclosed, and relate to the field of communication technologies, so that when receiving a multi-destination aggregated medium access control protocol data unit MD-A-MPDU, a receiving communication apparatus can quickly determine whether the receiving communication apparatus needs to parse the MD-A-MPDU, and if the receiving communication apparatus does not need to parse the MD-A-MPDU, the receiving communication apparatus may, in advance, stop receiving, to reduce power consumption, and help the receiving communication apparatus save energy. The method may include: A first communication apparatus receives a physical layer protocol data unit PPDU from a second communication apparatus. The PPDU includes first identification information and an MD-A-MPDU, the first identification information indicates a destination communication apparatus group associated with the MD-A-MPDU, and a number of bits occupied by the first identification information is 11. The first communication apparatus parses the PPDU.

## Description

This application claims priority to Chinese Patent Application No. 202211611815.4, filed with the China National Intellectual Property Administration on December 14, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In an existing wireless local area network (wireless local area network, WLAN) communication system, a transmitting communication apparatus and a receiving communication apparatus may transmit control signaling, management signaling, or data by using a medium access control protocol data unit (medium access control protocol data unit, MPDU).

To reduce overheads caused by channel contention and a preamble of a physical layer protocol data unit (physical layer protocol data unit, PPDU), and improve transmission efficiency, a plurality of MPDUs may be aggregated to form an aggregated MPDU (aggregated MPDU, A-MPDU).

To implement multi-destination transmission, receiving addresses of different MPDUs in the A-MPDU may be set to be different. The A-MPDU may be referred to as a multi-destination A-MPDU (multi-destination A-MPDU, MD-A-MPDU), and receiving addresses of at least two MPDUs in the MD-A-MPDU are different.

However, receiving addresses of MPDUs in the MD-A-MPDU are not completely the same. Therefore, the receiving communication apparatus needs to read each MPDU in the MD-A-MPDU, to identify whether each MPDU is sent to the receiving communication apparatus. As a result, power consumption of the receiving communication apparatus is high, and this is unfavorable to energy saving of the receiving communication apparatus.

### SUMMARY

Embodiments of this application provide a communication method and apparatus, so that when receiving a multi-destination aggregated medium access control protocol data unit MD-A-MPDU, a receiving communication apparatus can quickly determine whether the receiving communication apparatus needs to parse the MD-A-MPDU, and if the receiving communication apparatus does not need to parse the MD-A-MPDU, the receiving communication apparatus may, in advance, stop receiving, to reduce power consumption, and help the receiving communication apparatus save energy.

According to a first aspect, an embodiment of this application provides a communication method. The method includes: A first communication apparatus receives a physical layer protocol data unit PPDU from a second communication apparatus, where the PPDU includes first identification information and a multi-destination aggregated medium access control protocol data unit MD-A-MPDU, the first identification information indicates a destination communication apparatus group associated with the MD-A-MPDU, and a number of bits occupied by the first identification information is 11; and the first communication apparatus parses the PPDU.

Based on the first aspect, the first identification information is carried in the PPDU, so that the first communication apparatus can determine, based on the first identification information, the destination communication apparatus group associated with the received MD-A-MPDU, and further determine whether the first communication apparatus needs to parse the MD-A-MPDU. To be specific, if the destination communication apparatus group indicated by the first identification information is a communication apparatus group associated with the first communication apparatus, the first communication apparatus may parse the MD-A-MPDU, to read a corresponding MPDU; or if the destination communication apparatus group indicated by the first identification information is not a communication apparatus group associated with the first communication apparatus, the first communication apparatus may, in advance, stop receiving, to simplify a receiving procedure of the first communication apparatus, reduce power consumption, and help the first communication apparatus save energy.

In a possible design, the first identification information is located in a user field in a first signal SIG field included in the PPDU.

Based on this possible design, the first identification information is carried in the user field, so that the first communication apparatus can determine, based on the user field, whether to parse the subsequent MD-A-MPDU without reading the MD-A-MPDU. This helps the communication apparatus save the energy.

In a possible design, the PPDU further includes one or more pieces of second identification information, where the second identification information indicates a destination communication apparatus associated with the MD-A-MPDU.

Based on this possible design, the second identification information is carried in the PPDU, so that a capability of identifying the destination communication apparatus more accurately can be provided. This further reduces the power consumption and saves the energy.

In a possible design, the second identification information is located in the user field in the first signal SIG field included in the PPDU.

Based on this possible design, the second identification information is carried in the user field, so that the first communication apparatus can determine, based on the user field, whether there is an MPDU corresponding to the first communication apparatus in the subsequent MD-A-MPDU. This helps the communication apparatus save the energy.

In a possible design, the PPDU further includes first indication information and second indication information, where the first indication information indicates that the PPDU is used for single-user transmission, and the second indication information indicates that the PPDU is used for single-user MD-A-MPDU transmission.

Based on this possible design, in this special indication method in which the first indication information is combined with the second indication information, the first communication apparatus can learn of a signal field subsequently designed for the MD-A-MPDU transmission.

In a possible design, the second identification information is identification information of the destination communication apparatus, or the second identification information is identification information of the destination communication apparatus in the destination communication apparatus group, or the second identification information is a bitmap, where the bitmap indicates whether a communication apparatus in the destination communication apparatus group is the destination communication apparatus.

Based on this possible design, a plurality of feasible solutions are provided for designing the second identification information.

In a possible design, the PPDU further includes third indication information and fourth indication information, where the third indication information is located in a resource unit RU allocation subfield, the third indication information indicates that there is more than one user field in an RU or multiple resource units MRU on which the MD-A-MPDU is transmitted, the fourth indication information is located in the user field in the first signal SIG field included in the PPDU, and the fourth indication information indicates that transmission in an RU or an MRU associated with the user field is MD-A-MPDU transmission.

Based on this possible design, in an OFDMA transmission scenario, a plurality of users need to receive the first signal field, and each of the users identifies whether there is a user field of the user in a plurality of user fields in the first signal field. Therefore, in a design of the first signal field, the third indication information and the fourth indication information may be set, to prevent a user field indicating MD-A-MPDU information from being incorrectly identified as a user field of another user. In other words, when more than one user field corresponds to transmission of one MD-A-MPDU, the third indication information and the fourth indication information may be carried.

In a possible design, the user field includes a modulation and coding scheme MCS field, and if a value of the MCS field is a first value, the MCS field is the fourth indication information.

In a possible design, the PPDU includes a plurality of pieces of first identification information, where the plurality of pieces of first identification information are located in different user fields.

In a possible design, if a value of the RU allocation subfield of the PPDU is a second value, the RU allocation subfield indicates that transmission in an RU or an MRU associated with the RU allocation subfield is the MD-A-MPDU transmission.

Based on the three possible designs, a plurality of feasible solutions are provided for designing the fourth indication information.

In a possible design, the PPDU further includes fifth indication information, where the fifth indication information indicates an access point AP to parse the MD-A-MPDU, and a station STA not to parse the MD-A-MPDU; or the fifth indication information indicates an AP not to parse the MD-A-MPDU, and a STA to parse the MD-A-MPDU; or the fifth indication information indicates an AP and a STA to parse the MD-A-MPDU.

In a possible design, the fifth indication information is located in a second signal SIG field of the PPDU.

Based on the two possible designs, in a special scenario in which a STA serves as a relay and simultaneously transmits the MD-A-MPDU to an AP and an end STA, the fifth indication information may be carried in the PPDU, to indicate whether the AP and the STA need to parse the MD-A-MPDU.

According to a second aspect, an embodiment of this application provides a communication method. The method may include: A second communication apparatus generates a physical layer protocol data unit PPDU; and sends the PPDU to a first communication apparatus, where the PPDU includes first identification information and a multi-destination aggregated medium access control protocol data unit MD-A-MPDU, the first identification information indicates a destination communication apparatus group associated with the MD-A-MPDU, and a number of bits occupied by the first identification information is 11.

Based on the second aspect, the first identification information is carried in the PPDU, so that the first communication apparatus can determine, based on the first identification information, the destination communication apparatus group associated with the received MD-A-MPDU, and further determine whether the first communication apparatus needs to parse the MD-A-MPDU. To be specific, if the destination communication apparatus group indicated by the first identification information is a communication apparatus group associated with the first communication apparatus, the first communication apparatus may parse the MD-A-MPDU, to read a corresponding MPDU; or if the destination communication apparatus group indicated by the first identification information is not a communication apparatus group associated with the first communication apparatus, the first communication apparatus may, in advance, stop receiving, to simplify a receiving procedure of the first communication apparatus, reduce power consumption, and help the first communication apparatus save energy.

It should be noted that, for specific descriptions of the PPDU in the second aspect, refer to the related descriptions of the PPDU according to the first aspect or any possible design of the first aspect. Details are not described again.

According to a third aspect, an embodiment of this application provides a communication method. The method may include: A first communication apparatus receives a physical layer protocol data unit PPDU from a second communication apparatus, where the PPDU includes third identification information, sixth indication information, and a multi-destination aggregated medium access control protocol data unit MD-A-MPDU, the third identification information indicates the second communication apparatus, and the sixth indication information indicates that transmission of the PPDU is MD-A-MPDU transmission; and the first communication apparatus parses the PPDU.

Based on the third aspect, when the sixth indication information indicates that transmission of the PPDU is the MD-A-MPDU transmission, identification information (namely, the third identification information) of a transmitting communication apparatus is carried in a first signal field. This can help a receiving communication apparatus identify whether the receiving communication apparatus may be a destination communication apparatus of the transmitted MD-A-MPDU. If the receiving communication apparatus is the destination communication apparatus for the MD-A-MPDU transmission, the receiving communication apparatus parses the MD-A-MPDU; or if the receiving communication apparatus is not the destination communication apparatus for the MD-A-MPDU transmission, the receiving communication apparatus stops receiving the MD-A-MPDU in advance, to reduce power consumption and save energy.

In a possible design, the third identification information is located in a user field in a first signal SIG field included in the PPDU.

Based on this possible design, the third identification information is carried in the user field, so that the first communication apparatus can determine, based on the user field, whether to parse the subsequent MD-A-MPDU without reading the MD-A-MPDU. This helps the communication apparatus save the energy.

In a possible design, the sixth indication information is located in a second signal SIG field of the PPDU, or the sixth indication information is located in a common field in the first signal SIG field of the PPDU, or the sixth indication information is located in each user field in the first SIG field, or the sixth indication information is located in a resource unit RU allocation subfield of the PPDU.

In a possible design, the PPDU includes a plurality of pieces of third identification information, where the plurality of pieces of third identification information are located in different user fields of the PPDU.

Based on the two possible designs, a plurality of feasible solutions are provided for designing the sixth indication information.

In a possible design, the PPDU further includes fifth indication information, where the fifth indication information indicates an access point AP to parse the MD-A-MPDU, and a station STAnot to parse the MD-A-MPDU; or the fifth indication information indicates an AP not to parse the MD-A-MPDU, and a STA to parse the MD-A-MPDU; or the fifth indication information indicates an AP and a STA to parse the MD-A-MPDU.

In a possible design, the fifth indication information is located in the second signal SIG field of the PPDU.

Based on the two possible designs, in a special scenario in which a STA serves as a relay and simultaneously transmits the MD-A-MPDU to an AP and an end STA, the fifth indication information may be carried in the PPDU, to indicate whether the AP and the STA need to parse the MD-A-MPDU.

According to a fourth aspect, an embodiment of this application provides a communication method. The method may include: A second communication apparatus generates a physical layer protocol data unit PPDU; and sends the PPDU to a first communication apparatus, where the PPDU includes third identification information, sixth indication information, and a multi-destination aggregated medium access control protocol data unit MD-A-MPDU, the third identification information indicates the second communication apparatus, and the sixth indication information indicates that transmission of the PPDU is MD-A-MPDU transmission.

Based on the fourth aspect, when the sixth indication information indicates that transmission of the PPDU is the MD-A-MPDU transmission, identification information (namely, the third identification information) of a transmitting communication apparatus is carried in a first signal field. This can help a receiving communication apparatus identify whether the receiving communication apparatus may be a destination communication apparatus of the transmitted MD-A-MPDU. If the receiving communication apparatus is the destination communication apparatus for the MD-A-MPDU transmission, the receiving communication apparatus parses the MD-A-MPDU; or if the receiving communication apparatus is not the destination communication apparatus for the MD-A-MPDU transmission, the receiving communication apparatus stops receiving the MD-A-MPDU in advance, to reduce power consumption and save energy.

It should be noted that, for specific descriptions of the PPDU in the fourth aspect, refer to the related descriptions of the PPDU according to the third aspect or any possible design of the third aspect. Details are not described again.

According to a fifth aspect, an embodiment of this application provides a communication method. The method may include: A first communication apparatus receives a physical layer protocol data unit PPDU from a second communication apparatus, where the PPDU includes a multi-destination aggregated medium access control protocol data unit MD-A-MPDU, the MD-A-MPDU includes a first MPDU, the first MPDU includes first identification information, and the first identification information indicates a destination communication apparatus group associated with the MD-A-MPDU; and the first communication apparatus parses the PPDU.

Based on the fifth aspect, the first identification information is carried in the MPDU, so that more indication information can be provided more flexibly. In addition, the first communication apparatus can determine, based on the first identification information, the destination communication apparatus group associated with the received MD-A-MPDU, and further determine whether the first communication apparatus needs to parse the subsequent MPDU. To be specific, if the destination communication apparatus group indicated by the first identification information is a communication apparatus group associated with the first communication apparatus, the first communication apparatus may parse the subsequent MPDU, to read the corresponding MPDU; or if the destination communication apparatus group indicated by the first identification information is not a communication apparatus group associated with the first communication apparatus, the first communication apparatus may, in advance, stop receiving, to simplify a receiving procedure of the first communication apparatus, reduce power consumption, and help the first communication apparatus save energy.

In a possible design, the first MPDU further includes one or more of the following information: one or more pieces of second identification information, start position information of an MPDU associated with each destination communication apparatus associated with the MD-A-MPDU, and end position information of the MPDU associated with each destination communication apparatus, where the second identification information indicates a destination communication apparatus associated with the MD-A-MPDU.

Based on this possible design, the related signaling information of the MD-A-MPDU transmission is carried in the MPDU, so that more indication information can be provided more flexibly.

In a possible design, the second identification information is identification information of the destination communication apparatus, or the second identification information is identification information of the destination communication apparatus in the destination communication apparatus group, or the second identification information is a bitmap, where the bitmap indicates whether a communication apparatus in the destination communication apparatus group is the destination communication apparatus.

Based on this possible design, a plurality of feasible solutions are provided for designing the second identification information.

In a possible design, each MPDU in the MD-A-MPDU further includes one or more of the following information: start position information of the MPDU and end position information of the MPDU.

Based on this possible design, when the related signaling information of MD-A-MPDU transmission occupies a small number of bits, the information may alternatively be carried in each MPDU. This is not limited.

In a possible design, the start position information includes one or more of the following: a sequence number of a start MPDU in an A-MPDU in which the start MPDU is located, a sequence number of the start MPDU, a sequence number of an orthogonal frequency division multiplexing OFDM symbol on which first bit information of the start MPDU is located, and a sequence number of an LDPC encoded codeword in which the first bit information of the start MPDU is located. The end position information includes one or more of the following: a sequence number of an end MPDU in an A-MPDU in which the end MPDU is located, a sequence number of the end MPDU, a sequence number of an OFDM symbol on which first bit information of the end MPDU is located, and a sequence number of a low-density parity-check LDPC code encoded codeword in which the first bit information of the end MPDU is located.

Based on this possible design, the destination communication apparatus can identify, based on the start position information and the end position information, a position of an MPDU corresponding to the destination communication apparatus, and does not need to always demodulate all MPDUs. This reduces the power consumption and saves the energy.

According to a sixth aspect, an embodiment of this application provides a communication method. The method may include: A second communication apparatus generates a physical layer protocol data unit PPDU; and sends the PPDU to a first communication apparatus, where the PPDU includes a multi-destination aggregated medium access control protocol data unit MD-A-MPDU, the MD-A-MPDU includes a first MPDU, the first MPDU includes first identification information, and the first identification information indicates a destination communication apparatus group associated with the MD-A-MPDU.

Based on the sixth aspect, the first identification information is carried in the MPDU, so that more indication information can be provided more flexibly. In addition, the first communication apparatus can determine, based on the first identification information, the destination communication apparatus group associated with the received MD-A-MPDU, and further determine whether the first communication apparatus needs to parse the subsequent MPDU. To be specific, if the destination communication apparatus group indicated by the first identification information is a communication apparatus group associated with the first communication apparatus, the first communication apparatus may parse the subsequent MPDU, to read the corresponding MPDU; or if the destination communication apparatus group indicated by the first identification information is not a communication apparatus group associated with the first communication apparatus, the first communication apparatus may, in advance, stop receiving, to simplify a receiving procedure of the first communication apparatus, reduce power consumption, and help the first communication apparatus save energy.

It should be noted that, for specific descriptions of the PPDU in the sixth aspect, refer to the related descriptions of the PPDU according to the fifth aspect or any possible design of the fifth aspect. Details are not described again.

According to a seventh aspect, an embodiment of this application provides a communication method. The method may include: A first communication apparatus receives a physical layer protocol data unit PPDU from a second communication apparatus, where the PPDU includes a multi-destination aggregated medium access control protocol data unit MD-A-MPDU, the MD-A-MPDU includes an MPDU associated with the first communication apparatus and an MPDU associated with a third communication apparatus, the MPDU associated with the first communication apparatus includes seventh indication information, and the seventh indication information indicates, after transmission of the MPDU of the first communication apparatus is interrupted, whether to continue the transmission of the MPDU of the first communication apparatus in the PPDU; and the first communication apparatus receives, based on the seventh indication information and by using the PPDU, the MPDU associated with the first communication apparatus.

Based on the seventh aspect, the seventh indication information is carried in the MPDU associated with the first communication apparatus, so that the first communication apparatus can determine, based on the seventh indication information, whether to continue to receive the MPDU by using the PPDU. If the seventh indication information indicates that after the transmission of the MPDU of the first communication apparatus is interrupted, the transmission of the MPDU of the first communication apparatus is continued in the PPDU, the first communication apparatus may continue to receive the MPDU by using the PPDU, and determine whether the received MPDU is an MPDU corresponding to the first communication apparatus. If the seventh indication information indicates that after the transmission of the MPDU of the first communication apparatus is interrupted, the transmission of the MPDU of the first communication apparatus is not continued in the PPDU, the first communication apparatus may, in advance, stop receiving, to reduce power consumption and save energy.

According to an eighth aspect, an embodiment of this application provides a communication method. The method may include: A second communication apparatus generates a physical layer protocol data unit PPDU, and sends the PPDU to a first communication apparatus and a third communication apparatus, where the PPDU includes a multi-destination aggregated medium access control protocol data unit MD-A-MPDU, the MD-A-MPDU includes an MPDU associated with the first communication apparatus and an MPDU associated with the third communication apparatus, the MPDU associated with the first communication apparatus includes seventh indication information, and the seventh indication information indicates, after transmission of the MPDU of the first communication apparatus is interrupted, whether to continue the transmission of the MPDU of the first communication apparatus in the PPDU.

Based on the eighth aspect, the seventh indication information is carried in the MPDU associated with the first communication apparatus, so that the first communication apparatus can determine, based on the seventh indication information, whether to continue to receive the MPDU by using the PPDU. If the seventh indication information indicates that after the transmission of the MPDU of the first communication apparatus is interrupted, the transmission of the MPDU of the first communication apparatus is continued in the PPDU, the first communication apparatus may continue to receive the MPDU by using the PPDU, and determine whether the received MPDU is an MPDU corresponding to the first communication apparatus. If the seventh indication information indicates that after the transmission of the MPDU of the first communication apparatus is interrupted, the transmission of the MPDU of the first communication apparatus is not continued in the PPDU, the first communication apparatus may, in advance, stop receiving, to reduce power consumption and save energy.

According to a ninth aspect, an embodiment of this application provides a communication apparatus. The communication apparatus may be used in the first communication apparatus according to the first aspect or the possible design of the first aspect, to implement functions performed by the first communication apparatus. The communication apparatus may be the first communication apparatus, or may be a chip, a system on chip, or the like of the first communication apparatus. The communication apparatus may perform, through hardware, the function performed by the first communication apparatus, or implement the function by hardware executing corresponding software. The hardware or the software includes one or more modules corresponding to the function, for example, a transceiver module and a processing module. The transceiver module is configured to receive a physical layer protocol data unit PPDU from a second communication apparatus, where the PPDU includes first identification information and a multi-destination aggregated medium access control protocol data unit MD-A-MPDU, the first identification information indicates a destination communication apparatus group associated with the MD-A-MPDU, and a number of bits occupied by the first identification information is 11; and the processing module is configured to parse the PPDU.

It should be noted that, for specific descriptions of the PPDU in the ninth aspect, refer to the related descriptions of the PPDU in the communication method according to the first aspect or any possible design of the first aspect, and for a specific implementation of the communication apparatus in the ninth aspect, refer to the behavior functions of the first communication apparatus in the communication method according to the first aspect or any possible design of the first aspect. Details are not described again.

According to a tenth aspect, an embodiment of this application provides a communication apparatus. The communication apparatus may be used in the second communication apparatus according to the second aspect or the possible design of the second aspect, to implement functions performed by the second communication apparatus. The communication apparatus may be the second communication apparatus, or may be a chip, a system on chip, or the like of the second communication apparatus. The communication apparatus may perform, through hardware, the function performed by the second communication apparatus, or implement the function by hardware executing corresponding software. The hardware or the software includes one or more modules corresponding to the function, for example, a transceiver module and a processing module. The processing module is configured to generate a physical layer protocol data unit PPDU; and the transceiver module is configured to send the PPDU to a first communication apparatus, where the PPDU includes first identification information and a multi-destination aggregated medium access control protocol data unit MD-A-MPDU, the first identification information indicates a destination communication apparatus group associated with the MD-A-MPDU, and a number of bits occupied by the first identification information is 11.

It should be noted that, for specific descriptions of the PPDU in the tenth aspect, refer to the related descriptions of the PPDU in the communication method according to the second aspect or any possible design of the second aspect, and for a specific implementation of the communication apparatus in the tenth aspect, refer to the behavior functions of the second communication apparatus in the communication method according to the second aspect or any possible design of the second aspect. Details are not described again.

According to an eleventh aspect, an embodiment of this application provides a communication apparatus. The communication apparatus may be used in the first communication apparatus according to the third aspect or the possible design of the third aspect, to implement functions performed by the first communication apparatus. The communication apparatus may be the first communication apparatus, or may be a chip, a system on chip, or the like of the first communication apparatus. The communication apparatus may perform, through hardware, the function performed by the first communication apparatus, or implement the function by hardware executing corresponding software. The hardware or the software includes one or more modules corresponding to the function, for example, a transceiver module and a processing module. The transceiver module is configured to receive a physical layer protocol data unit PPDU from a second communication apparatus, where the PPDU includes third identification information, sixth indication information, and a multi-destination aggregated medium access control protocol data unit MD-A-MPDU, the third identification information indicates the second communication apparatus, and the sixth indication information indicates that transmission of the PPDU is MD-A-MPDU transmission; and the processing module is configured to parse the PPDU.

It should be noted that, for specific descriptions of the PPDU in the eleventh aspect, refer to the related descriptions of the PPDU in the communication method according to the third aspect or any possible design of the third aspect, and for a specific implementation of the communication apparatus in the eleventh aspect, refer to the behavior functions of the first communication apparatus in the communication method according to the third aspect or any possible design of the third aspect. Details are not described again.

According to a twelfth aspect, an embodiment of this application provides a communication apparatus. The communication apparatus may be used in the second communication apparatus according to the fourth aspect or the possible design of the fourth aspect, to implement functions performed by the second communication apparatus. The communication apparatus may be the second communication apparatus, or may be a chip, a system on chip, or the like of the second communication apparatus. The communication apparatus may perform, through hardware, the function performed by the second communication apparatus, or implement the function by hardware executing corresponding software. The hardware or the software includes one or more modules corresponding to the function, for example, a transceiver module and a processing module. The processing module is configured to generate a physical layer protocol data unit PPDU; and the transceiver module is configured to send the PPDU to a first communication apparatus, where the PPDU includes third identification information, sixth indication information, and a multi-destination aggregated medium access control protocol data unit MD-A-MPDU, the third identification information indicates the second communication apparatus, and the sixth indication information indicates that transmission of the PPDU is MD-A-MPDU transmission.

It should be noted that, for specific descriptions of the PPDU in the twelfth aspect, refer to the related descriptions of the PPDU in the communication method according to the fourth aspect or any possible design of the fourth aspect, and for a specific implementation of the communication apparatus in the twelfth aspect, refer to the behavior functions of the second communication apparatus in the communication method according to the fourth aspect or any possible design of the fourth aspect. Details are not described again.

According to a thirteenth aspect, an embodiment of this application provides a communication apparatus. The communication apparatus may be used in the first communication apparatus according to the fifth aspect or the possible design of the fifth aspect, to implement functions performed by the first communication apparatus. The communication apparatus may be the first communication apparatus, or may be a chip, a system on chip, or the like of the first communication apparatus. The communication apparatus may perform, through hardware, the function performed by the first communication apparatus, or implement the function by hardware executing corresponding software. The hardware or the software includes one or more modules corresponding to the function, for example, a transceiver module and a processing module. The transceiver module is configured to receive a physical layer protocol data unit PPDU from a second communication apparatus, where the PPDU includes a multi-destination aggregated medium access control protocol data unit MD-A-MPDU, the MD-A-MPDU includes a first MPDU, the first MPDU includes first identification information, and the first identification information indicates a destination communication apparatus group associated with the MD-A-MPDU; and the processing module is configured to parse the PPDU.

It should be noted that, for specific descriptions of the PPDU in the thirteenth aspect, refer to the related descriptions of the PPDU in the communication method according to the fifth aspect or any possible design of the fifth aspect, and for a specific implementation of the communication apparatus in the thirteenth aspect, refer to the behavior functions of the first communication apparatus in the communication method according to the fifth aspect or any possible design of the fifth aspect. Details are not described again.

According to a fourteenth aspect, an embodiment of this application provides a communication apparatus. The communication apparatus may be used in the second communication apparatus according to the sixth aspect or the possible design of the sixth aspect, to implement functions performed by the second communication apparatus. The communication apparatus may be the second communication apparatus, or may be a chip, a system on chip, or the like of the second communication apparatus. The communication apparatus may perform, through hardware, the function performed by the second communication apparatus, or implement the function by hardware executing corresponding software. The hardware or the software includes one or more modules corresponding to the function, for example, a transceiver module and a processing module. The processing module is configured to generate a physical layer protocol data unit PPDU; and the transceiver module is configured to send the PPDU to a first communication apparatus, where the PPDU includes a multi-destination aggregated medium access control protocol data unit MD-A-MPDU, the MD-A-MPDU includes a first MPDU, the first MPDU includes first identification information, and the first identification information indicates a destination communication apparatus group associated with the MD-A-MPDU.

It should be noted that, for specific descriptions of the PPDU in the fourteenth aspect, refer to the related descriptions of the PPDU in the communication method according to the sixth aspect or any possible design of the sixth aspect, and for a specific implementation of the communication apparatus in the fourteenth aspect, refer to the behavior functions of the second communication apparatus in the communication method according to the sixth aspect or any possible design of the sixth aspect. Details are not described again.

According to a fifteenth aspect, an embodiment of this application provides a communication apparatus. The communication apparatus may be used in the first communication apparatus according to the seventh aspect or the possible design of the seventh aspect, to implement functions performed by the first communication apparatus. The communication apparatus may be the first communication apparatus, or may be a chip, a system on chip, or the like of the first communication apparatus. The communication apparatus may perform, through hardware, the function performed by the first communication apparatus, or implement the function by hardware executing corresponding software. The hardware or the software includes one or more modules corresponding to the function, for example, a transceiver module and a processing module. The transceiver module is configured to receive a physical layer protocol data unit PPDU from a second communication apparatus, where the PPDU includes a multi-destination aggregated medium access control protocol data unit MD-A-MPDU, the MD-A-MPDU includes an MPDU associated with the first communication apparatus and an MPDU associated with a third communication apparatus, the MPDU associated with the first communication apparatus includes seventh indication information, and the seventh indication information indicates, after transmission of the MPDU of the first communication apparatus is interrupted, whether to continue the transmission of the MPDU of the first communication apparatus in the PPDU; and the transceiver module is further configured to receive, based on the seventh indication information and by using the PPDU, the MPDU associated with the first communication apparatus.

It should be noted that, for specific descriptions of the PPDU in the fifteenth aspect, refer to the related descriptions of the PPDU in the communication method according to the seventh aspect or any possible design of the seventh aspect, and for a specific implementation of the communication apparatus in the fifteenth aspect, refer to the behavior functions of the first communication apparatus in the communication method according to the seventh aspect or any possible design of the seventh aspect. Details are not described again.

According to a sixteenth aspect, an embodiment of this application provides a communication apparatus. The communication apparatus may be used in the second communication apparatus according to the eighth aspect or the possible design of the eighth aspect, to implement functions performed by the second communication apparatus. The communication apparatus may be the second communication apparatus, or may be a chip, a system on chip, or the like of the second communication apparatus. The communication apparatus may perform, through hardware, the function performed by the second communication apparatus, or implement the function by hardware executing corresponding software. The hardware or the software includes one or more modules corresponding to the function, for example, a transceiver module and a processing module. The processing module is configured to generate a physical layer protocol data unit PPDU; and the transceiver module is configured to send the PPDU to a first communication apparatus and a third communication apparatus, where the PPDU includes a multi-destination aggregated medium access control protocol data unit MD-A-MPDU, the MD-A-MPDU includes an MPDU associated with the first communication apparatus and an MPDU associated with the third communication apparatus, the MPDU associated with the first communication apparatus includes seventh indication information, and the seventh indication information indicates, after transmission of the MPDU of the first communication apparatus is interrupted, whether to continue the transmission of the MPDU of the first communication apparatus in the PPDU.

It should be noted that, for specific descriptions of the PPDU in the sixteenth aspect, refer to the related descriptions of the PPDU in the communication method according to the eighth aspect or any possible design of the eighth aspect, and for a specific implementation of the communication apparatus in the sixteenth aspect, refer to the behavior functions of the second communication apparatus in the communication method according to the eighth aspect or any possible design of the eighth aspect. Details are not described again.

According to a seventeenth aspect, an embodiment of this application provides a communication apparatus. The communication apparatus includes one or more processors. The one or more processors are configured to run a computer program or instructions. When the one or more processors execute the computer program or the instructions, the communication apparatus is enabled to perform the communication method according to any one of the first aspect to the eighth aspect. The communication apparatus may be a first communication apparatus or a second communication apparatus, or may be a chip, a system on chip, or the like of the first communication apparatus or the second communication apparatus.

In a possible design, the communication apparatus further includes one or more memories, the one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighteenth aspect, an embodiment of this application provides a communication apparatus. The communication apparatus includes an input/output interface and a logic circuit. The input/output interface is configured to input and/or output information. The logic circuit is configured to perform the communication method according to any one of the first aspect to the eighth aspect, to perform processing based on information and/or generate information.

According to a nineteenth aspect, an embodiment of this application provides a computer-readable storage medium. The computer-readable storage medium stores computer instructions or a program. When the computer instructions or the program is run on a computer, the communication method according to any one of the first aspect to the eighth aspect is performed.

According to a twentieth aspect, an embodiment of this application provides a computer program product including computer instructions. When the computer program product runs on a computer, the communication method according to any one of the first aspect to the eighth aspect is performed.

According to a twenty-first aspect, an embodiment of this application provides a computer program. When the computer program is run on a computer, the communication method according to any one of the first aspect to the eighth aspect is performed.

For technical effect brought by any design manner of the seventeenth aspect to the twenty-first aspect, refer to the technical effect brought by any one of the first aspect to the eighth aspect.

According to a twenty-second aspect, a communication method is provided. The communication method may include the communication method according to the first aspect and the communication method according to the second aspect, or include the communication method according to the third aspect and the communication method according to the fourth aspect, or include the communication method according to the fifth aspect and the communication method according to the sixth aspect, or include the communication method according to the seventh aspect and the communication method according to the eighth aspect.

According to a twenty-third aspect, a communication system is provided. The communication system may include the first communication apparatus according to the ninth aspect and the second communication apparatus according to the tenth aspect, or include the first communication apparatus according to the eleventh aspect and the second communication apparatus according to the twelfth aspect, or include the first communication apparatus according to the thirteenth aspect and the second communication apparatus according to the fourteenth aspect, or include the first communication apparatus according to the fifteenth aspect and the second communication apparatus according to the sixteenth aspect.

### BRIEF DESCRIPTION OF DRAWINGS

FIG. 1 is a diagram of a frame structure of an MPDU according to an embodiment of this application;
FIG. 2 is a diagram of a frame structure of an A-control subfield according to an embodiment of this application;
FIG. 3 is a diagram of a frame structure of an A-MPDU according to an embodiment of this application;
FIG. 4 is a diagram of a frame structure of an MPDU delimiter according to an embodiment of this application;
FIG. 5 is a diagram of a frame structure of an MD-A-MPDU according to an embodiment of this application;
FIG. 6 is a diagram of a communication system according to an embodiment of this application;
FIG. 7 is a diagram of a structure of an access point device, a station device, or a relay device according to an embodiment of this application;
FIG. 8 is a diagram of composition of a communication apparatus according to an embodiment of this application;
FIG. 9 is a flowchart of a communication method according to an embodiment of this application;
FIG. 10 is a diagram of a frame structure of a PPDU according to an embodiment of this application;
FIG. 11 is a diagram of a frame structure of a first signal field according to an embodiment of this application;
FIG. 12 is a diagram of a frame structure of a first signal field according to an embodiment of this application;
FIG. 13 is a diagram of a frame structure of a first signal field according to an embodiment of this application;
FIG. 14 is a diagram of a frame structure of a first signal field according to an embodiment of this application;
FIG. 15 is a diagram of a frame structure of a first signal field according to an embodiment of this application;
FIG. 16 is a diagram of a frame structure of a first signal field according to an embodiment of this application;
FIG. 17A to FIG. 17C are a diagram of a frame structure of a first signal field according to an embodiment of this application;
FIG. 18 is a diagram of a communication system according to an embodiment of this application;
FIG. 19 is a diagram of a frame structure of a first signal field according to an embodiment of this application;
FIG. 20 is a diagram of a frame structure of an MD-A-MPDU according to an embodiment of this application;
FIG. 21 is a diagram of a frame structure of an A-control field according to an embodiment of this application;
FIG. 22 is a diagram of preemption transmission according to an embodiment of this application;
FIG. 23 is a diagram of composition of a communication apparatus according to an embodiment of this application; and
FIG. 24 is a diagram of composition of a communication apparatus according to an embodiment of this application.

### DESCRIPTION OF EMBODIMENTS

Before embodiments of this application are described, technical terms used in embodiments of this application are described.

A wireless local area network (wireless local area network, WLAN) communication system has developed for a plurality of generations starting from the 802.11a/b/g standard, for example, the 802.11n standard, the 802.11ac standard, the 802.11ax standard, the 802.11be standard, and a next-generation 802.11 standard.

Standards before the 802.11n standard, for example, the 802.11a/b/g standard, may be collectively referred to as a non-high throughput (non-high throughput, non-HT) standard. The 802.11n standard may be referred to as a high throughput (high throughput, HT) standard. The 802.11ac standard may be referred to as a very high throughput (very high throughput, VHT) standard. The 802.11ax standard may be referred to as a high efficiency (high efficiency, HE) standard, or may be referred to as the sixth generation wireless fidelity (the sixth wireless fidelity, Wi-Fi 6) standard. The 802.11be standard may be referred to as an extremely high throughput (extremely high throughput, EHT) standard, or may be referred to as a Wi-Fi 7 standard. The next-generation 802.11 standard may be referred to as an ultra-high reliability (ultra-high reliability, UHR) standard or a standard named otherwise, or may be referred to as a Wi-Fi 8 standard. This is not limited.

In the WLAN communication system, communication may be performed between communication apparatuses by using a physical layer protocol data unit (physical protocol data unit, PPDU). The PPDU is a carrier sent at a physical layer, and may alternatively be described as a data packet, a packet, or a physical layer packet.

The PPDU may include a medium access control protocol data unit (medium access control protocol data unit, MPDU). Control signaling, management signaling, or data may be transmitted between the communication apparatuses by using an MPDU. The MPDU may alternatively be referred to as a MAC frame, and the MPDU may be carried in a data field (data field) of the PPDU.

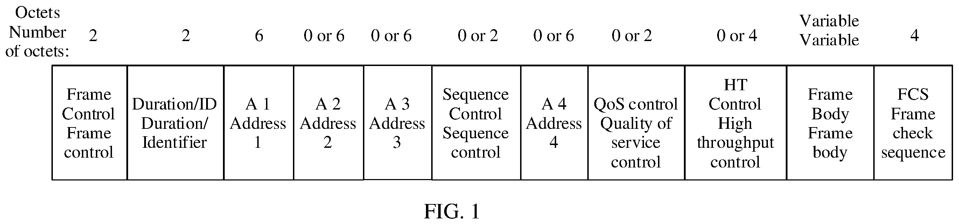

For example, as shown in FIG. 1, the MPDU may include a frame header, a frame body (frame body), and a frame check sequence (frame check sequence, FCS) field. The frame header may include a frame control (frame control) field, a duration/identifier (duration/ID) field, address fields (for example, an address 1, an address 2, an address 3, and an address 4), a sequence control (sequence control) field, a quality of service control (QoS control) field, a high throughput control (HT control) field, and the like. The frame body may be used to carry data or some management and control information transmitted from an upper layer. The frame check sequence field may be used to check whether the MPDU is correctly transmitted.

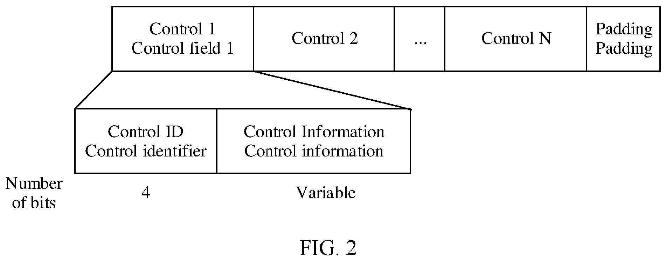

In the high throughput control field, a transmitting communication apparatus may transmit some control information. An aggregated control (aggregated control, A-control) subfield in a high efficient variant (for example, three forms: a high throughput variant, an extremely high throughput variant, and a high efficient variant) of the high throughput control field may use one or more structures including a control identifier and control information shown in FIG. 2, to carry different control information, and the control identifier may indicate a type of the control information.

Based on the foregoing description of the MPDU, MPDU aggregation is further introduced in the 802.11 standard in which a plurality of MPDUs are aggregated to form an aggregated MPDU (aggregated MPDU, A-MPDU), to reduce overheads caused by channel contention and a preamble of a PPDU, and improve transmission efficiency. The A-MPDU may be carried in the data field of the PPDU.

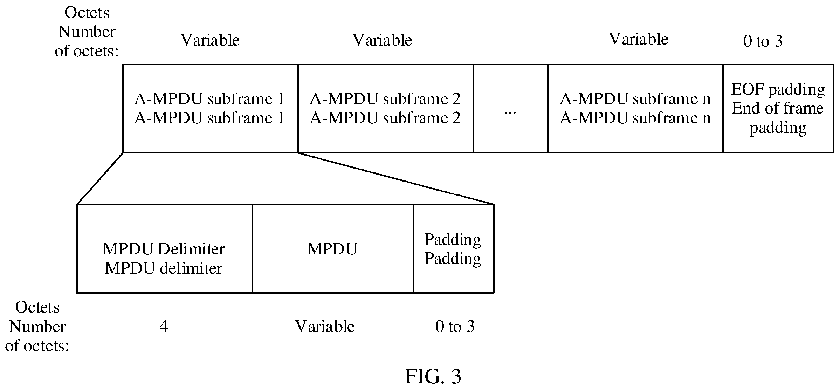

For example, as shown in FIG. 3, the A-MPDU may include a plurality of A-MPDU subframes (A-MPDU subframes), and may further include an end of frame (end of frame, EOF) field. Each A-MPDU subframe may include an MPDU delimiter (MPDU delimiter), an MPDU, and a padding (padding) part. The MPDU delimiter may be used to delimit the plurality of aggregated MPDUs.

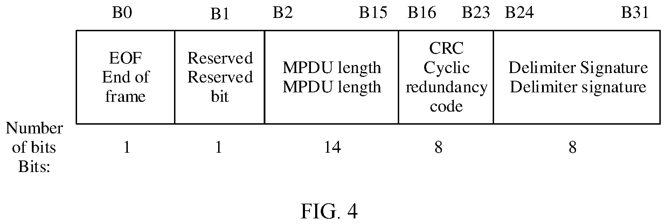

As shown in FIG. 4, the MPDU delimiter includes a total of 4 octets, and may include an end of frame field, a reserved (reserved) bit field, an MPDU length (MPDU length) field, a cyclic redundancy code (cyclic redundancy code, CRC) field, and a delimiter signature (delimiter signature) field.

The end of frame usually indicates whether the MPDU is a last MPDU. The MPDU length indicates a number of octets of an MPDU following the MPDU. The delimiter signature field is a characteristic sequence (an ASCII value is a symbol 'N'), and is used to help a receiving communication apparatus search for an MPDU delimiter. Even if the receiving communication apparatus incorrectly demodulates an MPDU delimiter or an MPDU, a next MPDU can still be found by searching for a next delimiter signature. This prevents error extension. The CRC is similar to the FCS, and is used to help the receiving communication apparatus check whether an error occurs in the MPDU delimiter. Another implementable function is to create a sliding window based on the length (4 octets) of the MPDU delimiter, and search for a next MPDU delimiter by checking whether check of the CRC succeeds.

In the A-MPDU, receiving addresses (receiving addresses, RA) of all MPDUs need to be the same. For example, in unicast, receiving communication apparatuses need to be a same station (station, STA); in multicast, the receiving communication apparatuses need to be in a same multicast group; and in broadcast, the receiving communication apparatuses are all STAs. The A-MPDU may also be referred to as a single-destination (single-destination, SD)-A-MPDU.

To implement multi-destination (multi-destination, MD) transmission, an MD-A-MPDU is introduced. To be specific, RAs (for example, addresses 1) of frame headers of different MPDUs are allowed to be MAC addresses of different receiving communication apparatuses. The MD-A-MPDU may alternatively be described as a multiple receiving address (multiple receiving address, M-RA)-A-MPDU.

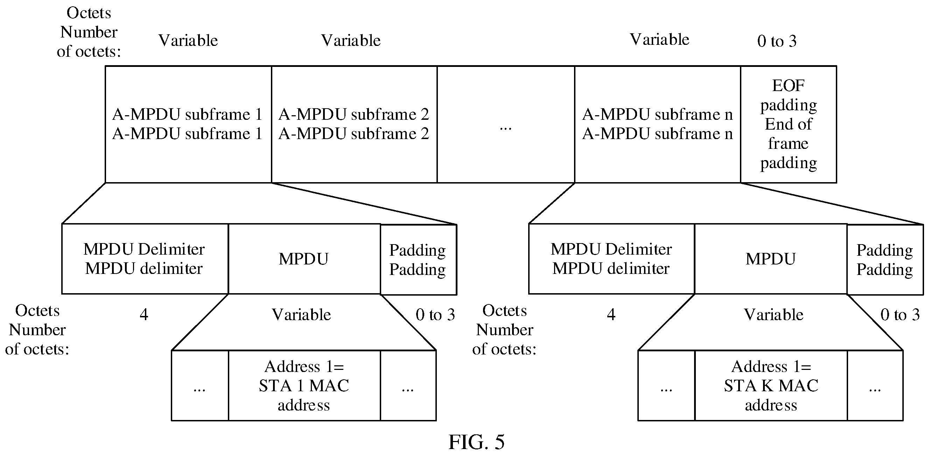

For example, as shown in FIG. 5, an address 1 of a 1^{st} MPDU in an MD-A-MPDU may be a MAC address of a STA 1, ..., and an address 1 of an n^{th} MPDU may be a MAC address of a STA K. In other words, in the MD-A-MPDU, addresses 1 of at least two MPDUs are different.

Based on the foregoing descriptions of the SD-A-MPDU and the MD-A-MPDU, for the SD-A-MPDU, the receiving communication apparatus only needs to read a receiving address of a 1^{st} MPDU in the SD-A-MPDU, to determine whether the SD-A-MPDU is sent to the receiving communication apparatus. If the SD-A-MPDU is sent to the receiving communication apparatus, the receiving communication apparatus continues to receive the SD-A-MPDU; or if the SD-A-MPDU is not sent to the receiving communication apparatus, the receiving communication apparatus may abort receiving and sleep, to reduce power consumption, and help the communication apparatus save energy.

However, receiving addresses of MPDUs in the MD-A-MPDU are not completely the same. Therefore, the receiving communication apparatus needs to read each MPDU in the MD-A-MPDU, to identify whether each MPDU is sent to the receiving communication apparatus, and further, read a corresponding MPDU. As a result, power consumption of the receiving communication apparatus is high, a waste of energy is caused, and this is unfavorable to energy saving of the receiving communication apparatus.

In conclusion, for the MD-A-MPDU, how to design a signal field to simplify a receiving procedure, reduce power consumption, and implement energy saving when the receiving communication apparatus receives the MD-A-MPDU becomes a technical problem to be urgently resolved.

To resolve the foregoing technical problem, embodiments of this application provide a communication method. The method may include: A first communication apparatus receives a PPDU from a second communication apparatus. The PPDU includes first identification information and an MD-A-MPDU, the first identification information indicates a destination communication apparatus group associated with the MD-A-MPDU, and a number of bits occupied by the first identification information is 11. The first communication apparatus parses the PPDU.

In embodiments of this application, the first identification information is carried in the PPDU, so that the first communication apparatus can determine, based on the first identification information, the destination communication apparatus group associated with the received MD-A-MPDU, and further determine whether the first communication apparatus needs to parse the MD-A-MPDU. To be specific, if the destination communication apparatus group indicated by the first identification information is a communication apparatus group associated with the first communication apparatus, the first communication apparatus may parse the MD-A-MPDU, to read a corresponding MPDU; or if the destination communication apparatus group indicated by the first identification information is not a communication apparatus group associated with the first communication apparatus, the first communication apparatus may, in advance, stop receiving, to reduce power consumption, and help the first communication apparatus save energy.

In addition, the first identification information is set to 11 bits, so that the first identification information may be carried in a station identifier field in a user field in a first signal field of the PPDU. The 11-bit first identification information is carried in the station identifier field in the user field in the first signal field, so that MD-A-MPDU transmission can be implemented, or 11-bit station identification information is carried, so that SD-A-MPDU transmission can be implemented. Further, hybrid transmission of SD-A-MPDU transmission and MD-A-MPDU transmission can be implemented in one PPDU.

When the first communication apparatus receives the PPDU, the first communication apparatus may identify the station identifier field in the PPDU in a unified format because both the first identification information and the station identification information are of 11 bits, to determine whether there is SD-A-MPDU transmission and/or MD-A-MPDU transmission belonging to the first communication apparatus. If the station identifier field includes the first identification information, the first communication apparatus may determine that the transmission is MD-A-MPDU transmission, and further, determine, based on the first identification information, whether the transmission is MD-A-MPDU transmission of the communication apparatus group associated with the first communication apparatus. If the first communication apparatus determines that the transmission is MD-A-MPDU transmission of the communication apparatus group associated with the first communication apparatus, the first communication apparatus reads, from the MD-A-MPDU, data belonging to the first communication apparatus, to simplify a receiving and parsing procedure; or if the first communication apparatus determines that the transmission is not MD-A-MPDU transmission of the communication apparatus group associated with the first communication apparatus, the first communication apparatus may, in advance, stop receiving, to reduce power consumption, and help the first communication apparatus save energy.

The following describes in detail implementations of embodiments of this application with reference to accompanying drawings in this specification.

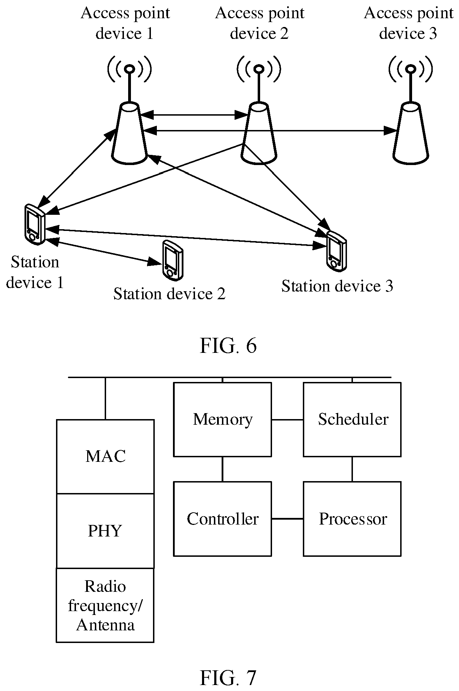

FIG. 6 is a diagram of a communication system according to an embodiment of this application. The communication system may be a system using the 802.11 standard. For example, the 802.11 standard includes but is not limited to the 802.11ax standard, the 802.11be standard, or the next-generation 802.11 standard.

As shown in FIG. 6, the communication system may include one or more access point devices and one or more station devices. Optionally, the communication apparatus may further include one or more relay devices.

The access point device may be an access point (access point, AP), or may be a chip or a processing system installed in the AP. The station device may be a station (station, STA), or may be a chip or a processing system installed in the STA.

Optionally, this application is applicable to a data communication scenario between one or more transmitting communication apparatuses and a plurality of receiving communication apparatuses. For example, the communication scenario may be a communication scenario between an AP and a STA, or may be a communication scenario between APs, or may be a communication scenario between STAs, or may be a communication scenario between at least two of a relay (relay) device, an AP, and a STA. The relay device may be a device that can implement relay, for example, an AP or a STA. This is not limited.

Optionally, the transmitting communication apparatus and the receiving communication apparatus may communicate with each other by using a PPDU, and the PPDU may be a PPDU corresponding to a generation of the 802.11 standard. For example, the 802.11 standard is a next-generation standard (for example, the UHR standard) of the 802.11be standard, and the PPDU may be a UHR PPDU. For example, the 802.11 standard is the 802.11be standard, and the PDU may be an EHT PPDU. This is not limited.

For example, the AP may be a device that supports a plurality of WLAN standards such as the 802.11a/b/g standard, the 802.11n standard, the 802.11ac standard, the 802.11ax standard, the 802.11be standard, or a next-generation 802.11 standard.

The AP is an apparatus having a wireless communication function, supports communication by using a WLAN protocol, has a function of communicating with another device (for example, a station or another access point) in a WLAN network, and certainly may further have a function of communicating with another device. In a WLAN communication system, the access point may alternatively be referred to as an access point station (AP STA). The apparatus having the wireless communication function may be an entire device, or may be a chip, a processing system, or the like installed on the entire device. The device in which the chip or the processing system is installed may implement a method and a function in embodiments of this application under control of the chip or the processing system. The AP in embodiments of this application is an apparatus that provides a service for a STA, and may support the 802.11 series protocols.

For example, the AP may be a communication entity like a communication server, a router, a switch, a bridge, a computer, or a mobile phone. The AP may alternatively be a macro base station, a micro base station, a relay station, or the like in various forms. The AP may alternatively be a chip and a processing system in these various forms of devices. The AP may alternatively be a terminal device or a network device with a Wi-Fi chip. The AP may alternatively be an access point for a mobile user to enter a wired network, and is mainly deployed at home, in a building, and in a park. A typical coverage radius ranges from dozens of meters to hundreds of meters. Certainly, the AP may alternatively be deployed outdoors. The AP is equivalent to a bridge that connects a wired network and a wireless network. A main function of the AP is to connect various wireless network clients together and then connect the wireless network to the Ethernet.

For example, the STA may be a device that supports a plurality of WLAN standards such as the 802.11a/b/g standard, the 802.11n standard, the 802.11ac standard, the 802.11ax standard, or the 802.11be standard.

The STA is an apparatus having a wireless communication function, supports communication by using a WLAN protocol, and has a capability of communicating with another station or an access point in the WLAN network. In the WLAN system, a station may be referred to as a non-access point station (non-access point station, non-AP STA). The STA is any user communication device that allows a user to communicate with the AP and further communicate with the WLAN. The apparatus having the wireless communication function may be an entire device, or may be a chip, a processing system, or the like installed in the entire device. The device in which the chip or the processing system is installed may implement a method and a function in embodiments of this application under control of the chip or the processing system.

For example, the STA may be user equipment that can be connected to the internet, for example, a communication server, a router, a switch, a bridge, a computer, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a mobile phone, a set-top box, a smart television, or a smart wearable device, may be an internet of things node in an internet of things, may be a vehicle-mounted communication apparatus in an internet of vehicles, may be an entertainment device, a game device or a system, a global positioning system device, or the like. The STA may alternatively be a chip and a processing system in the terminals. Alternatively, the STA may be a wireless communication chip, a wireless sensor, or a wireless communication terminal.

For example, the access point device, the station device, or the relay device may have a structure shown in FIG. 7. The access point device, the station device, or the relay device may be multi-radio frequency/multi-antenna, or may be single-radio frequency/single-antenna. The access point device, the station device, or the relay device may send a PPDU at a medium access control (medium access control, MAC) layer and a physical (physical, PHY) layer and through the radio frequency/antenna, or receive a PPDU through the radio frequency/antenna and send the PPDU to a PHY layer and a MAC layer. The radio frequency/antenna may alternatively be referred to as a transmitter or a receiver.

As shown in FIG. 7, the access point device, the station device, or the relay device may further include a memory, a scheduler, a controller, and a processor. The memory is configured to store signaling information, a preset value agreed in advance, and the like, and the processor is configured to: parse signaling information and process related data. In addition, both the transmitting communication apparatus and the receiving communication apparatus include a queue that can be preempted and a fast queue. In addition, there is an interface between the two queues, and the two queues may communicate with each other.

It should be noted that the access point device, the station device, and the relay device in embodiments of this application each may be one or more chips, may be a system on chip (system on chip, SOC), or the like. FIG. 6 is merely an example figure, and a number of devices included in FIG. 6 is not limited. In addition, besides the devices shown in FIG. 6, the communication system may further include another device, for example, may further include a wireless backhaul device. Names of the devices and the links in FIG. 6 are not limited. In addition to the names shown in FIG. 6, the devices and the links may alternatively have other names. This is not limited.

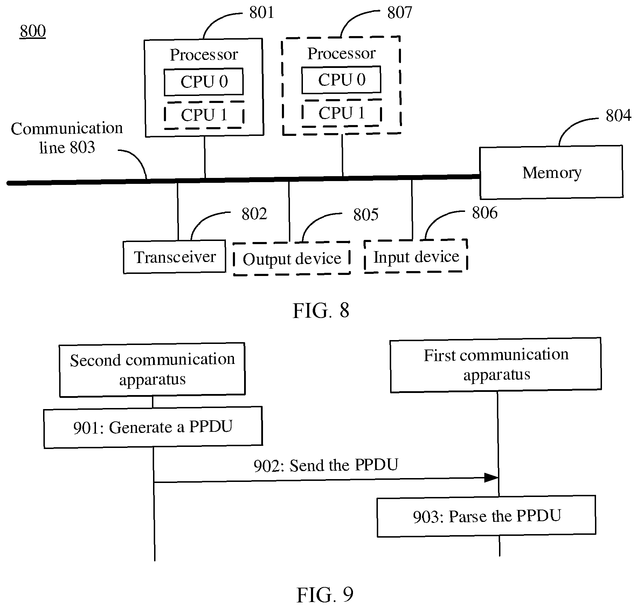

During specific implementation, as shown in FIG. 6, each access point device, each station device, and each relay device may use a composition structure shown in FIG. 8, or include components shown in FIG. 8. FIG. 8 is a diagram of composition of a communication apparatus 800 according to an embodiment of this application. The communication apparatus 800 may be a terminal device, or a chip or a system on chip in a terminal device, may be an access network device, or a chip or a system on chip in an access network device, or may be a core network device, or a chip or a system on chip in the core network device. As shown in FIG. 8, the communication apparatus 800 includes a processor 801, a transceiver 802, and a communication line 803.

Further, the communication apparatus 800 may further include a memory 804. The processor 801, the memory 804, and the transceiver 802 may be connected through the communication line 803.

The processor 801 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 801 may be another apparatus having a processing function, for example, a circuit, a component, or a software module. This is not limited.

The transceiver 802 is configured to communicate with another device or another communication network. The another communication network may be the Ethernet, a radio access network (radio access network, RAN), a wireless local area network (wireless local area network, WLAN), or the like. The transceiver 802 may be a module, a circuit, a transceiver, or any apparatus that can implement communication.

The communication line 803 is configured to transfer information between the components included in the communication apparatus 800.

The memory 804 is configured to store instructions. The instructions may be a computer program.

The memory 804 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or the like. This is not limited.

It should be noted that the memory 804 may exist independently of the processor 801, or may be integrated with the processor 801. The memory 804 may be configured to store instructions, program code, some data, or the like. The memory 804 may be located inside the communication apparatus 800, or may be located outside the communication apparatus 800. This is not limited. The processor 801 is configured to execute the instructions stored in the memory 804, to implement a communication method provided in the following embodiments of this application.

In an example, the processor 801 may include one or more CPUs, for example, a CPU 0 and a CPU 1 in FIG. 8.

In an optional implementation, the communication apparatus 800 includes a plurality of processors. For example, the communication apparatus 800 may further include a processor 807 in addition to the processor 801 in FIG. 8.

In an optional implementation, the communication apparatus 800 further includes an output device 805 and an input device 806. For example, the input device 806 is a device like a keyboard, a mouse, a microphone, or a joystick, and the output device 805 is a device like a display or a speaker (speaker).

It should be noted that the communication apparatus 800 may be a desktop computer, a portable computer, a network server, a mobile phone, a tablet computer, a wireless terminal, an embedded device, a chip system, or a device having a structure similar to that in FIG. 8. In addition, the composition structure shown in FIG. 8 does not constitute a limitation on the communication apparatus. In addition to the components shown in FIG. 8, the communication apparatus may include more or fewer components than those shown in the figure, a combination of some components, or splits from some components, or a different component layout.

In embodiments of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 6, a communication method provided in embodiments of this application is described with reference to FIG. 9. A first communication apparatus may be any access point device, station device, or relay device configured to receive a PPDU in the communication system shown in FIG. 6 (the first communication apparatus may alternatively be described as a receiving communication apparatus). A second communication apparatus may be any access point device, station device, or relay device configured to send a PPDU in the communication system shown in FIG. 6 (the second communication apparatus may alternatively be described as a transmitting communication apparatus). The first communication apparatus and the second communication apparatus in the following embodiments each may include the components shown in FIG. 8. Processing performed by a single execution body (the first communication apparatus or the second communication apparatus) shown in embodiments of this application may alternatively be performed by a plurality of execution bodies. These execution bodies may be logically and/or physically separated. This is not limited.

FIG. 9 is a flowchart of a communication method according to an embodiment of this application. As shown in FIG. 9, the method may include the following steps.

Step 901: A second communication apparatus generates a PPDU.

The PPDU may include first identification information and an MD-A-MPDU, the first identification information may indicate a destination communication apparatus group associated with the MD-A-MPDU, and a number of bits occupied by the first identification information is 11.

When the second communication apparatus generates the PPDU, the first identification information is carried in the PPDU, so that a first communication apparatus can determine, based on the first identification information, the destination communication apparatus group associated with the received MD-A-MPDU, and further determine whether the first communication apparatus needs to parse the MD-A-MPDU. If the destination communication apparatus group indicated by the first identification information is a communication apparatus group associated with the first communication apparatus, the first communication apparatus may parse the MD-A-MPDU, to read a corresponding MPDU; or if the destination communication apparatus group indicated by the first identification information is not a communication apparatus group associated with the first communication apparatus, the first communication apparatus may, in advance, stop receiving, to simplify a receiving procedure of the first communication apparatus, reduce power consumption, and help the first communication apparatus save energy.

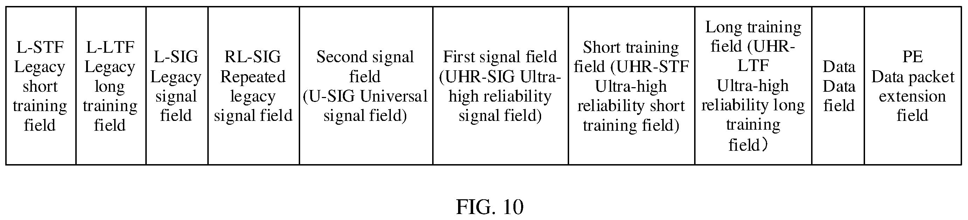

For example, refer to FIG. 10. The PPDU may include a preamble part, a data (data) field, and a data packet extension (packet extension, PE) field.

Optionally, the preamble part may include legacy preambles: a legacy short training field (legacy short training field, L-STF, or referred to as a non-HT STF), a legacy long training field (legacy long training field, L-LTF), and a legacy signal field (legacy signal field, L-SIG) that are used to ensure coexistence of a new device and a legacy device. The L-SIG may include a length field, and may indirectly indicate duration of a part after the L-SIG in the PPDU. In addition, a repeated legacy signal (RL-SIG) field may be further included, to enhance reliability of the legacy signal field. Further, this provides a method to help a receiving communication apparatus identify that the PPDU is a PPDU in the EHT standard or a PPDU in a specific generation of subsequent standards by detecting whether two symbols are the same and based on features such as a remainder of a length in the L-SIG.

Optionally, the preamble part may further include a second signal field (or described as a second SIG field). The second signal field may be a universal signal field (universal SIG, U-SIG), the U-SIG field may exist in a PPDU in the EHT standard and a PPDU in several generations of subsequent standards, and the U-SIG field may indicate that the PPDU is an EHT PPDU or a PPDU (for example, a UHR PPDU) in a specific generation of subsequent standards.

Optionally, the preamble part may further include a first signal field (or described as a first SIG field). For example, the 802.11 standard is the UHR standard, and the first signal field may be a UHR-SIG field.

Signaling information required for demodulating the subsequent data field may be carried in the U-SIG field and the UHR-SIG field.

Optionally, the preamble part may further include a short training field and a long training field that are respectively used for automatic gain control and channel estimation. For example, the 802.11 standard is the UHR standard. The short training field may be an ultra-high reliability short training field (ultra-high reliability short training field, UHR-STF), and the long training field may be an ultra-high reliability long training field (ultra-high reliability long training field, UHR-LTF).

Optionally, the data field may include the MD-A-MPDU.

Optionally, the data packet extension field may provide more time for the receiving communication apparatus to process data.

It should be noted that the foregoing is merely an example of the PPDU, and specific names and a sequence of the fields included in the PPDU may change. This is not limited in this application.

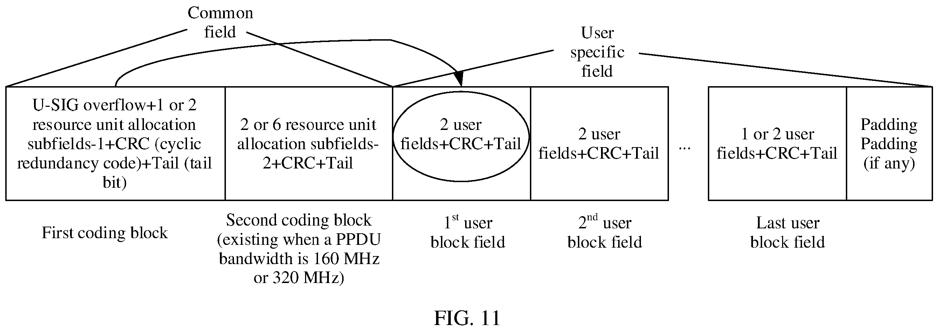

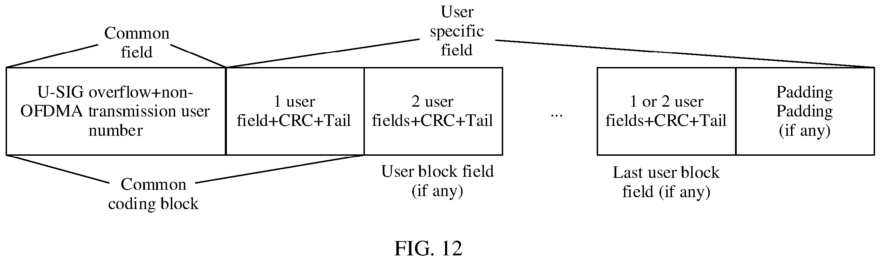

Based on the foregoing descriptions of the first signal field, the first signal field is described in detail by using frame structures shown in FIG. 11 and FIG. 12.

In a first possible design, an orthogonal frequency division multiple access (orthogonal frequency division multiple access, OFDMA) transmission scenario is used as an example. As shown in FIG. 11, a content channel of the first signal field may include a common field and a user specific field (user specific field).

The common field may include U-SIG overflow information (namely, some common information like a spatial multiplexing parameter, a size of a guard interval and a size of a long training field, and a number of UHR-LTF symbols that cannot be carried in the U-SIG field), one or two resource unit allocation subfields-1 (resource unit allocation subfields-1, RU allocation subfields-1), two or six resource unit allocation subfields-2 that exist when a bandwidth is greater than or equal to 160 MHz (for example, 160 MHz or 320 MHz), a CRC used for check, and a tail (tail) subfield used for cyclic decoding. In the OFDMA transmission scenario, the resource unit allocation subfield (the resource unit allocation subfield-1 and/or the resource unit allocation subfield-2) divides an entire PPDU bandwidth into predetermined resource units.

In the user specific field, there are 1 to M user fields (user fields) in a sequence of resource unit allocation. In the M user fields, two user fields usually belong to one group, and every two user fields are followed by one CRC field and one tail field, to form a user block field. In the last group (or the last user block field), there may be one or two user fields.

In a second possible design, a non-OFDMA transmission scenario is used as an example. As shown in FIG. 12, a content channel of the first signal field may include a common field and a user specific field.

In comparison with the OFDMA transmission scenario, in the non-OFDMA transmission scenario, there is no resource unit allocation subfield in the first signal field, a 1^{st} user field is encoded together with the common field, and another user field is the same as that in the OFDMA transmission scenario. In non-OFDMA transmission, if there is only one user, the transmission is single-user transmission; or if there are a plurality of users, the transmission is multiple-user multiple-input multiple-output (multiple-user multiple-input multiple-output, MU-MIMO) transmission. One user herein does not necessarily indicate one receiving communication apparatus since the transmission may be broadcast transmission, multicast transmission, or MD-A-MPDU transmission.

Based on the foregoing two possible designs, the user field in the first signal field may be in a format of a user field that is allocated to non-MU-MIMO transmission and that is shown in Table 1. To be specific, an RU or multiple RUs (MRU) are allocated to only one user, and the RU or the MRU corresponds to only one user field. Alternatively, the user field in the first signal field may be in a format of a user field that is allocated to the MU-MIMO transmission and that is shown in Table 2. To be specific, an RU or MRU are allocated to more than one user, and MU-MIMO transmission is performed on the RU or the MRU.

**Table 1 Format of a user field allocated to non-MU-MIMO**

| Subfield | Number of bits | Meaning |
|---|---|---|
| Station identifier (STA ID) | 11 | Indicate identification information of one STA. |
| Modulation and coding scheme (modulation and coding scheme, MCS) | 4 | Indicate a modulation and coding scheme: |
| | | 0: BPSK and R (bit rate): 1/2 |
| | | 1: QPSK and R: 1/2 |
| | | 2: QPSK and R: 3/4 |
| | | 3: 16-QAM and R: 1/2 |
| | | 4: 16-QAM and R: 3/4 |
| | | 5: 64-QAM and R: 2/3 |
| | | 6: 64-QAM and R: 3/4 |
| | | 7: 64-QAM and R: 5/6 |
| | | 8: 256-QAM and R: 3/4 |
| | | 9: 256-QAM and R: 5/6 |
| | | 10: 1024-QAM and R: 3/4 |
| | | 11: 1024-QAM and R: 5/6 |
| | | 12: 4096-QAM and R: 3/4 |
| | | 13: 4096-QAM and R: 5/6 |
| | | 14: BPSK+dual-carrier modulation+repetition and |
| | | R: 1/2 |
| | | 15: BPSK+dual-carrier modulation and R: 1/2 |
| Reserved (reserved) | 1 | Reserved and set to 1 |
| Number of spatial streams (number of spatial streams, NSS) | 4 | Indicate a number of spatial streams of the STA. |
| | | 802.11be supports 1 to 8 spatial streams, which are indicated by 0 to 7, and other entries (8 to 15) are reserved. |
| Beamformed (beamformed) | 1 | Indicate whether a beamforming steering matrix is used for allocation. |
| Coding (coding) | 1 | Indicate whether a coding scheme is binary convolution code (binary convolution code, BCC) or low-density parity-check (low-density parity-check, LDPC) code. |

**Table 2 Format of a user field allocated to MU-MIMO**

| Subfield | Number of bits | Meaning |
|---|---|---|
| Station identifier (STA ID) | 11 | Indicate identification information of one STA. |
| Modulation and coding scheme (MCS) | 4 | Indicate a modulation and coding scheme: |
| | | 0: BPSK and R (bit rate): 1/2 |
| | | 1: QSPK and R: 1/2 |
| | | 2: QPSK and R: 3/4 |
| | | 3: 16-QAM and R: 1/2 |
| | | 4: 16-QAM and R: 3/4 |
| | | 5: 64-QAM and R: 2/3 |
| | | 6: 64-QAM and R: 3/4 |
| | | 7: 64-QAM and R: 5/6 |
| | | 8: 256-QAM and R: 3/4 |
| | | 9: 256-QAM and R: 5/6 |
| | | 10: 1024-QAM and R: 3/4 |
| | | 11: 1024-QAM and R: 5/6 |
| | | 12: 4096-QAM and R: 3/4 |
| | | 13: 4096-QAM and R: 5/6 |
| | | 14 and 15: reserved |
| Coding (coding) | 1 | Indicate whether a coding scheme is BCC or LDPC. |
| Spatial configuration (spatial configuration) | 6 | Indicate a number of spatial streams of one user in the MU-MIMO allocation. |

Based on the foregoing descriptions of the first signal field and the user field, optionally, the first identification information is located in the user field in the first signal field included in the PPDU.

The first signal field may indicate, based on the first identification information, that the MD-A-MPDU is transmitted on a subsequent RU or MRU (covering a non-OFDMA scenario of an entire bandwidth, and in this case, there is only one RU or MRU in the entire bandwidth). This helps the first communication apparatus identify whether the communication apparatus group to which the first communication apparatus belongs is the destination communication apparatus group, or identify whether the first communication apparatus is a destination communication apparatus (or described as a destination receiving end or a destination receiving communication apparatus).

In a first possible manner, the first identification information may be located in a station identifier field in the user field.

A station identifier field in a user field may be set to the first identification information. The first identification information may indicate the destination communication apparatus group associated with the MD-A-MPDU, and the number of bits occupied by the first identification information is 11.

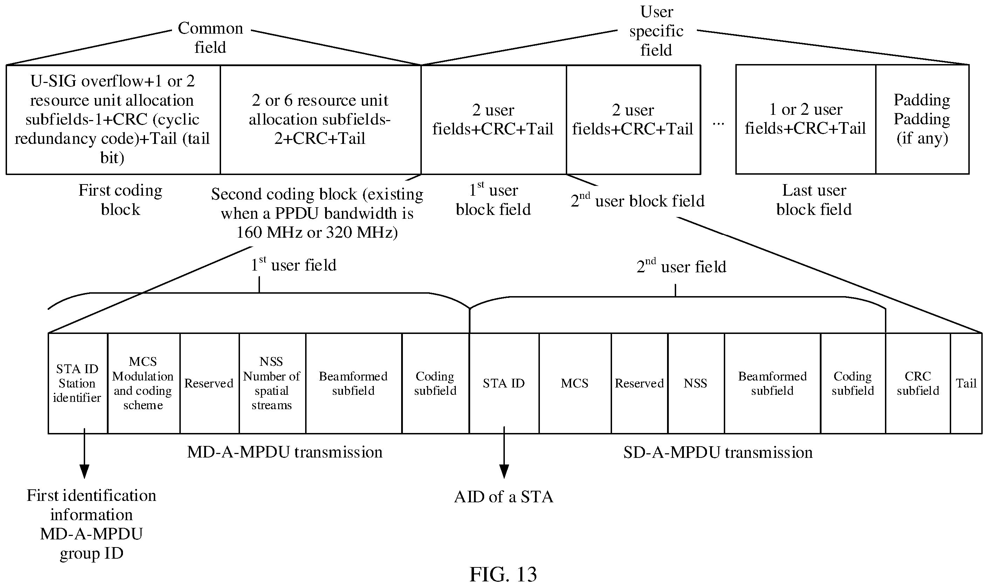

For example, as shown in FIG. 13, the OFDMA transmission scenario is used as an example. A station identifier field in a user field (for example, a 1^{st} user field) corresponding to the RU or the MRU on which the MD-A-MPDU is transmitted may be set to the first identification information.

The first identification information is set to 11 bits, so that the first identification information may be carried in the station identifier field in the user field in the first signal field of the PPDU. The 11-bit first identification information is carried in the station identifier field in the user field in the first signal field, so that MD-A-MPDU transmission can be implemented, or 11-bit station identification information is carried, so that SD-A-MPDU transmission can be implemented. Further, hybrid transmission of SD-A-MPDU transmission and MD-A-MPDU transmission can be implemented in one PPDU.

When the first communication apparatus receives the PPDU, the first communication apparatus may identify the station identifier field in the PPDU in a unified format because both the first identification information and the station identification information are of 11 bits, to determine whether there is SD-A-MPDU transmission and/or MD-A-MPDU transmission belonging to the first communication apparatus. If the station identifier field includes the first identification information, the first communication apparatus may determine that the transmission is the MD-A-MPDU transmission, and further, determine, based on the first identification information, whether the transmission is MD-A-MPDU transmission of the communication apparatus group associated with the first communication apparatus. If the first communication apparatus determines that the transmission is MD-A-MPDU transmission of the communication apparatus group associated with the first communication apparatus, the first communication apparatus reads, from the MD-A-MPDU, data belonging to the first communication apparatus, to simplify a receiving and parsing procedure; or if the first communication apparatus determines that the transmission is not MD-A-MPDU transmission of the communication apparatus group associated with the first communication apparatus, the first communication apparatus may, in advance, stop receiving, to reduce power consumption, and help the first communication apparatus save energy.

For example, the first identification information may be an MD-A-MPDU group identifier (MD-A-MPDU group ID).

Optionally, the MD-A-MPDU group ID may be determined through negotiation in advance. For example, the MD-A-MPDU group ID may be allocated by an AP, a relay, or an organizer of a point-to-point communication group when the STAis associated. Alternatively, after the STA is associated, an MD-A-MPDU group and an MD-A-MPDU group ID may be separately determined through management frame interaction.

It should be noted that the MD-A-MPDU group ID is merely a name example, and another group ID may be directly used. For example, a relay STA and an end STA may form a relay group, and a relay group ID may be used as the MD-A-MPDU group ID, or end STAs may form an end group, and an end group ID may be used as the MD-A-MPDU group ID.

Based on the first possible manner, when receiving the PPDU sent by the second communication apparatus, the first communication apparatus may read the user field in the first signal field of the PPDU, and determine, based on the first identification information in the station field in the user field, the destination communication apparatus group associated with the MD-A-MPDU in the data field of the PPDU. If the communication apparatus group associated with the first communication apparatus is the destination communication apparatus group, the first communication apparatus may read the MD-A-MPDU in the data field of the PPDU, identify, based on a receiving address, whether the first communication apparatus is the destination communication apparatus (or the destination receiving), and read the corresponding MPDU. If the communication apparatus group associated with the first communication apparatus is not the destination communication apparatus group, the first communication apparatus does not need to read the MD-A-MPDU in the data field of the PPDU, to reduce the power consumption and save the energy.

In addition, in this application, the first identification information may be carried in a station identifier field in any user field in the first signal field. When the first communication apparatus reads the user field in the first signal field of the PPDU, if there are a plurality of user fields in the first signal field, the first communication apparatus may read each user field in the first signal field one by one until the first identification information is read, or read all user fields in the first signal field.

When reading the first identification information, the first communication apparatus may determine that the current transmission is the MD-A-MPDU transmission, and further, determine, based on the first identification information, whether the transmission is the MD-A-MPDU transmission of the communication apparatus group associated with the first communication apparatus. If the first communication apparatus determines that the transmission is the MD-A-MPDU transmission of the communication apparatus group associated with the first communication apparatus, the first communication apparatus reads, from the MD-A-MPDU, the data belonging to the first communication apparatus; or if the first communication apparatus determines that the transmission is not the MD-A-MPDU transmission of the communication apparatus group associated with the first communication apparatus, the first communication apparatus may, in advance, stop receiving, to reduce the power consumption, and help the first communication apparatus save energy.

When the first communication apparatus completes reading of all the user fields in the first signal field, if the first identification information exists, the first communication apparatus may determine that the current transmission is the MD-A-MPDU transmission, and further determine whether to read, from the MD-A-MPDU, the MPDU belonging to the first communication apparatus; or if the first identification information does not exist, the first communication apparatus may determine that the current transmission is not the MD-A-MPDU transmission, and if identification information of the first communication apparatus is carried in a station identifier field, the first communication apparatus may read, from the data field of the PPDU, the MPDU belonging to the first communication apparatus.

It should be noted that the first possible manner is applicable to both OFDMA transmission and non-OFDMA transmission.

In a second possible manner, the PPDU may include the first identification information, and may further include one or more pieces of second identification information.

The second identification information may indicate a destination communication apparatus associated with the MD-A-MPDU.

For example, the second identification information may be identification information of the destination communication apparatus.

For example, the destination communication apparatus is a STA, and the second identification information may be a STA ID, and the STA ID may be an 11-bit association ID (association ID, AID) of the STA.

The first identification information may be located in the station identifier field in the user field, and the one or more pieces of second identification information may be located in the user field in the first signal field included in the PPDU.

Optionally, the user field in which the first identification information is located and the user field in which the one or more pieces of second identification information are located are different user fields.

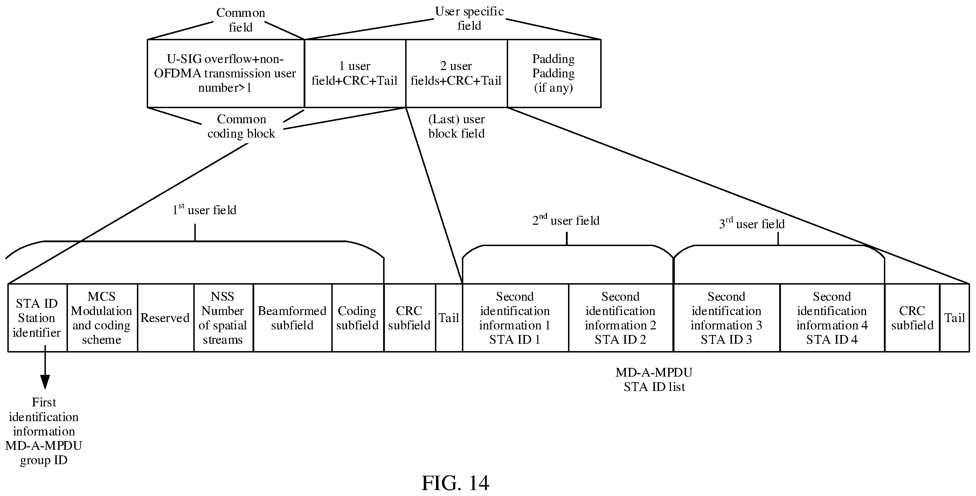

For example, as shown in FIG. 14, the non-OFDMA communication scenario is used as an example. The first identification information may be set in a station identifier field in a 1^{st} user field, and the plurality of pieces of second identification information may be set in a 2^{nd} user field and a 3^{rd} user field.

Optionally, in the non-OFDMA communication scenario, the PPDU may further include first indication information and second indication information.

The first indication information may indicate that the PPDU is used for single-user transmission, and the second indication information may indicate that the PPDU is used for single-user MD-A-MPDU transmission.

Optionally, the first indication information may be located in the second signal field of the PPDU.

Optionally, the second indication information may be located in the common field in the first signal field of the PPDU.

For example, as shown in FIG. 14, the second indication information may be a non-OFDMA transmission user (field) number field in the common field. The non-OFDMA transmission user number may be set to be greater than 1, to indicate that the PPDU is used for the single-user MD-A-MPDU transmission, or indicate that there is more than one user field in the RU or the MRU on which the MD-A-MPDU is transmitted.

In this special indication method in which the first indication information is combined with the second indication information, the receiving communication apparatus can learn of a signal field subsequently designed for the MD-A-MPDU transmission. Alternatively, more broadly, the receiving communication apparatus corresponds to more than one user field, or in other words, based on the information in Table 1, additional information (for example, the first identification information and the second identification information) is further provided.

In a third possible manner, different from the second possible manner in which the second identification information is set to the identification information of the destination communication apparatus, the second identification information may alternatively be identification information of the destination communication apparatus in the destination communication apparatus group.

In addition to using long second identification information (for example, the 11-bit STA ID in the second possible manner), short second identification information may be further defined for some specific scenarios. For example, in a relay scenario or a point-to--multi point transmission (point-to-multipoint, P2MP) scenario, there are not many receiving communication apparatuses that communicate with a relay or station. For example, if there are a maximum of four receiving communication apparatuses that communicate with a relay, a 2-bit end station identifier (End STA ID, EID) may indicate identification information of each receiving communication apparatus (namely, the destination communication apparatus) in a communication apparatus group (namely, the destination communication apparatus group). In other words, for an MD-A-MPDU group or a P2MP group, identification information of each communication apparatus in the group may be separately defined, to reduce signaling overheads.

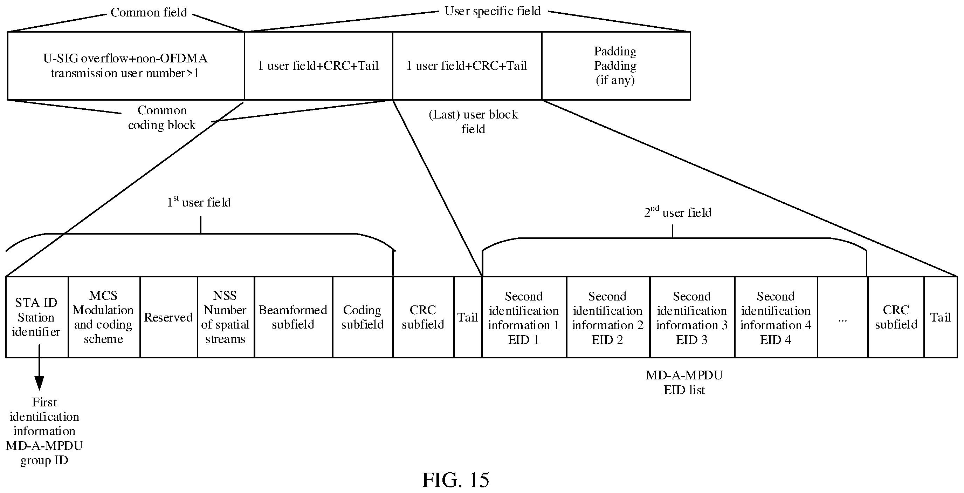

For example, as shown in FIG. 15, the non-OFDMA communication scenario is used as an example. The first identification information may be set in a station identifier field in a 1^{st} user field, and the plurality of pieces of second identification information (EID) may be set in a 2^{nd} user field and a 3^{rd} user field.

In the second possible manner and the third possible manner, in the non-OFDMA transmission scenario, the first identification information may not be carried, and the second identification information is directly carried. Alternatively, the number of bits of the first identification information in the second possible manner and the third possible manner is set to a number of bits less than 11, to reduce the signaling overheads.

For example, the station identifier field in the 1^{st} user field in FIG. 14 or FIG. 15 does not exist, or is used to carry the second identification information of the destination communication apparatus.

In a fourth possible manner, different from the second possible manner in which the second identification information is set to the identification information of the destination communication apparatus and the third possible manner in which the second identification information is set to the identification information of the destination communication apparatus in the destination communication apparatus group, the second identification information may alternatively be a bitmap (bitmap, EID bitmap).

The bitmap may indicate whether a communication apparatus in the destination communication apparatus group is the destination communication apparatus.

For example, each bit in the bitmap corresponds to each communication apparatus in a destination communication apparatus group. Each bit in the bitmap may be set to 1 or 0, to indicate communication apparatuses that are in the destination communication apparatus group and that need to receive the transmitted MD-A-MPDU. For example, a value 1 indicates that the MD-A-MPDU needs to be received (or a value 1 indicates that a communication apparatus is the destination communication apparatus), and a value 0 indicates that the MD-A-MPDU does not need to be received (or a value 0 indicates that a communication apparatus is not the destination communication apparatus).

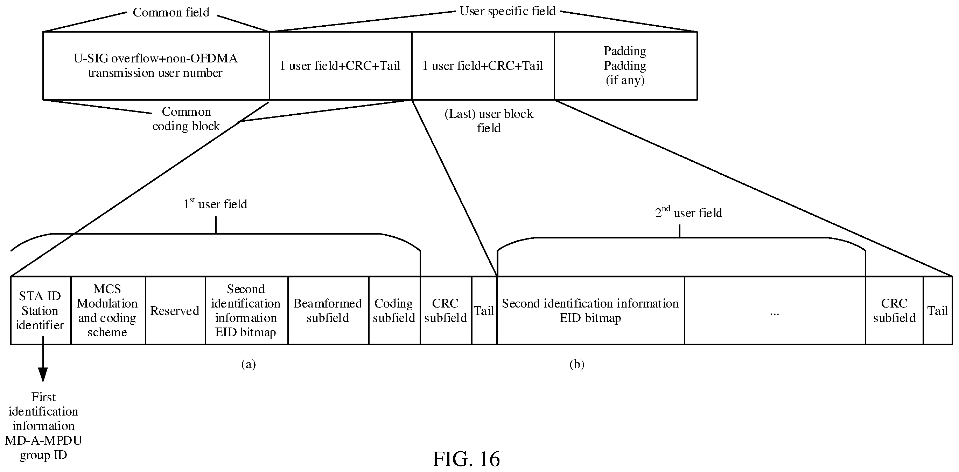

For example, as shown in (b) in FIG. 16, the bitmap may be carried in a 2^{nd} user field in the first signal field, or as shown in (a) in FIG. 16, the bitmap may be directly carried in a 1^{st} user field. For example, if one spatial stream is always used for the MD-A-MPDU transmission, the NSS field may be changed to a 4-bit bitmap. In this case, the 2^{nd} user field may not need to be carried.

Based on the second possible manner to the fourth possible manner, when receiving the PPDU sent by the second communication apparatus, the first communication apparatus may read the user field in the first signal field of the PPDU, and determine, in the data field of the PPDU based on the first identification information and the second identification information in the user field, the destination communication apparatus group associated with the MD-A-MPDU and one or more destination communication apparatuses associated with the MD-A-MPDU. If the communication apparatus group associated with the first communication apparatus is the destination communication apparatus group, and the first communication apparatus is the destination communication apparatus, the first communication apparatus may read the MD-A-MPDU in the data field of the PPDU, and read, based on the receiving address, the MPDU corresponding to the first communication apparatus. If the communication apparatus group associated with the first communication apparatus is not the destination communication apparatus group, or although the communication apparatus group associated with the first communication apparatus is the destination communication apparatus group, the first communication apparatus is not the destination communication apparatus, the first communication apparatus does not need to read the MD-A-MPDU in the data field of the PPDU, to reduce the power consumption and save the energy.

In the second possible manner to the fourth possible manner, the non-OFDMA transmission scenario is used as an example. In this case, single-user transmission is performed, and the signal field is designed freely because receiving of another user is not affected.

In comparison with the first possible manner, in the second possible implementation to the fourth possible implementation, the second identification information is carried in the PPDU, so that a capability of identifying the destination communication apparatus more accurately can be provided. This further reduces the power consumption and saves the energy.

In a fifth possible manner, the PPDU includes the first identification information, and the PPDU may further include third indication information and fourth indication information.

The third indication information indicates that there is more than one user field in an RU or an MRU on which the MD-A-MPDU is transmitted, and the fourth indication information indicates that transmission in an RU or an MRU associated with the user field is the MD-A-MPDU transmission.

In the OFDMA transmission scenario, a plurality of users need to receive the first signal field, and each of the users identifies whether there is a user field of the user in a plurality of user fields in the first signal field. Therefore, in a design of the first signal field, the third indication information and the fourth indication information may be set, to prevent a user field indicating MD-A-MPDU information from being incorrectly identified as a user field of another user. In other words, when more than one user field corresponds to transmission of one MD-A-MPDU, the third indication information and the fourth indication information may be carried.

Optionally, the third indication information is located in a resource unit allocation subfield.

Optionally, the fourth indication information is located in the user field in the first signal field included in the PPDU.

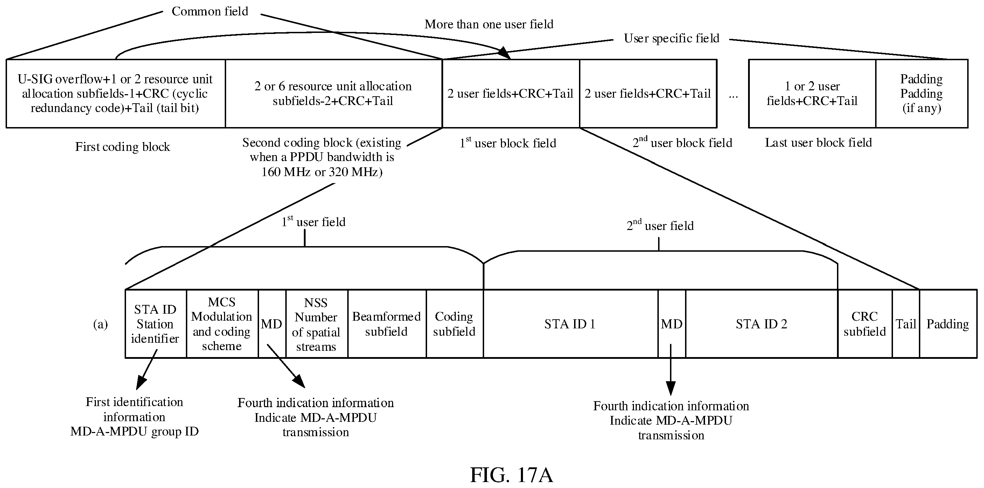

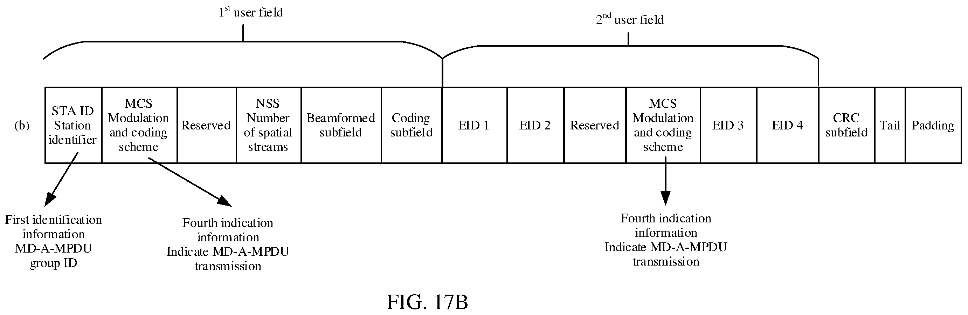

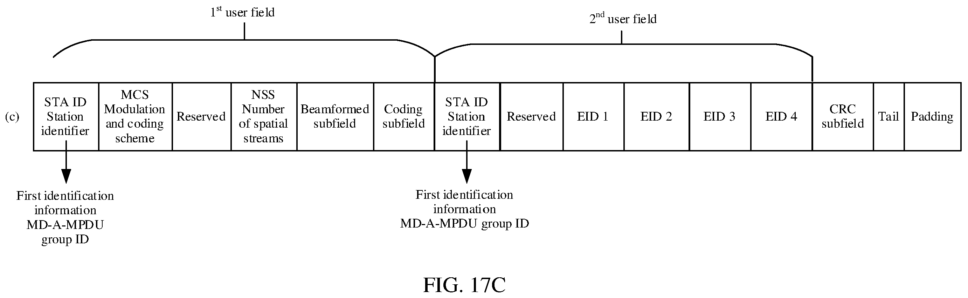

For example, 1 bit may be used in the user field to indicate the fourth indication information. For example, as shown in FIG. 17A, 1 reserved bit may be used in the user field to indicate the fourth indication information. Alternatively, the fourth indication information may be indicated by using reserved entries of some fields. For example, as shown in FIG. 17B, if a value of the MCS field in the user field is a first value (for example, the value of the MCS field is 14 or 15), the MCS field may indicate the fourth indication information. Alternatively, the first identification information may be carried in station identifier fields in more than one user field. In this way, another receiving communication apparatus does not identify the first identification information as identification information of the another receiving communication apparatus. For example, as shown in FIG. 17C, the first signal field of the PPDU may include a plurality of pieces of first identification information, and the plurality of pieces of first identification information may be located in different user fields, to indicate that transmission in an RU or an MRU associated with the user field is the MD-A-MPDU transmission.

In still another example, reserved entries of different resource unit allocation subfields may alternatively indicate whether the RU or the MRU associated with the resource unit allocation subfield is the MD-A-MPDU transmission or other transmission (for example, the MU-MIMO transmission). If the resource unit allocation subfield indicates the MD-A-MPDU transmission, the resource unit allocation subfield may correspond to at least two user fields, and then the signaling related to the MD-A-MPDU in the manner is further indicated in the corresponding user field.

For example, if a value of the resource unit allocation subfield of the PPDU is a second value, the resource unit allocation subfield may indicate that the RU or the MRU associated with the resource unit allocation subfield is the MD-A-MPDU transmission.

Optionally, if the first signal field of the PPDU received by the first communication apparatus includes both first identification information (for example, an identifier of an MD-A-MPDU group to which the destination communication apparatus belongs) and identification information (for example, an AID) of the first communication apparatus, a receiving priority may be defined. For example, the first communication apparatus preferably receives data in an RU or an MRU corresponding to the identification information of the first communication apparatus. If the first communication apparatus has a simultaneous receiving capability, the first communication apparatus simultaneously receives the MD-A-MPDU and the data.

Optionally, based on the foregoing descriptions of the PPDU, the PPDU may further include fifth indication information.

The fifth indication information may indicate an AP to parse the MD-A-MPDU, and a STA not to parse the MD-A-MPDU; or the fifth indication information may indicate an AP not to parse the MD-A-MPDU, and a STA to parse the MD-A-MPDU; or the fifth indication information may indicate an AP and a STA to parse the MD-A-MPDU.

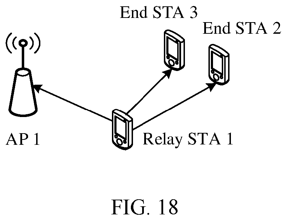

As shown in FIG. 18, in a special scenario in which the STA serves as a relay and simultaneously transmits the MD-A-MPDU to an AP and an end STA, the fifth indication information may be carried in the PPDU, to indicate whether the AP and the STA need to parse the MD-A-MPDU.

Optionally, the fifth indication information is located in the second signal field of the PPDU.

In the second signal field, there is 1-bit uplink/downlink (DL/UL) indication information. When transmission is oriented to the AP, the DL/UL indication information is indicated as 1; otherwise, the DL/UL indication information is indicated as 0. When the DL/UL indication information is indicated as 1, another STA usually does not need to perform receiving. When the DL/UL indication information is indicated as 0, the AP usually does not need to perform receiving. However, for the transmission shown in FIG. 18, it may be considered that uplink or downlink communication is performed simultaneously, or it may be considered that uplink and station-to-station communication is performed simultaneously. An additional signaling indication may be added based on the DL/UL indication information, to indicate the fifth indication information.

In a possible implementation, the DL/UL indication information may be first indicated as 0, so that all STAs receive the MD-A-MPDU, and then an additional signaling indication indicates that the AP also needs to receive the MD-A-MPDU. For example, 1 bit is used as the additional signaling indication. A value 0 of the bit indicates that the AP needs to receive the MD-A-MPDU, and a value 1 of the bit indicates that the AP does not need to receive the MD-A-MPDU.

In another possible implementation, the DL/UL indication information and the additional signaling indication (for example, 1 bit) may be combined as the fifth indication information, and one of the four possible modes provided in Table 3 is selected to indicate the uplink/downlink hybrid mode, where the additional signaling indication may be a validate (validate) reserved bit.

**Table 3**

| Fifth indication information (DL/U indication information and additional signaling indication) | Meaning |
|---|---|
| 01 | Transmitted to the STA |
| 11 | Transmitted to AP |
| 00 | Transmitted to both the AP and the STA |
| 10 | Reserved |

When the fifth indication information exists, the AP and the STA may determine, based on the fifth indication information, whether the AP and the STA need to receive the MD-A-MPDU.

Optionally, the identification information of the AP may not need to be provided in the first signal field. Alternatively, the STA ID of the AP may be additionally defined. When the AP reads the STA ID of the AP, the AP receives the transmitted MD-A-MPDU. Alternatively, the AP may serve as a member of the destination communication apparatus group associated with the MD-A-MPDU. This is not limited.

Step 902: The second communication apparatus sends the PPDU to the first communication apparatus. Correspondingly, the first communication apparatus receives the PPDU from the second communication apparatus.

Step 903: The first communication apparatus parses the PPDU.

The first communication apparatus may parse the PPDU with reference to the related descriptions of the first possible manner to the fifth possible manner in step 901. Details are not described herein again.

In the method shown in FIG. 9, in comparison with the SD-A-MPDU transmission, in the MD-A-MPDU transmission, multi-user transmission is introduced, so that overheads caused by channel contention and the preamble of the physical layer can be further reduced. However, because multi-user transmission is performed at a MAC layer, all users need to use unified physical layer parameters (such as the MCS and the number of spatial streams), and usually, a lowest rate is used out of consideration for a user with a worst channel condition. In addition, because the users are usually in different positions, beamforming usually cannot be performed on the transmitting communication apparatus. Consequently, a gain brought by beamforming is reduced. Therefore, performance of the MD-A-MPDU is usually inferior to that of other multi-user transmission mechanisms such as DL OFDMA and DL MU-MIMO transmission.

However, during use of a low-cost relay device (for example, a terminal device like a station serving as the relay), or during point-to-multipoint station-to-station communication, because the STA does not have a capability of a DL OFDMA scheduler and a capability of a DL MU-MIMO scheduler, it is more suitable to use a low-complexity multi-user multiplexing transmission technology like the MD-A-MPDU, to improve system efficiency. In addition, with reference to the communication method provided in this application, the first identification information is carried in the PPDU, so that the first communication apparatus can determine, based on the first identification information, whether the first communication apparatus needs to parse the MD-A-MPDU. If the first communication apparatus does not need to parse the MD-A-MPDU, the first communication apparatus may, in advance, stop receiving, to simplify the receiving procedure of the first communication apparatus, reduce the power consumption, and help the first communication apparatus save the energy.

Optionally, a second implementation of the PPDU is similar to the PPDU shown in FIG. 9, and a difference lies in that the third identification information rather than the first identification information is carried in the station identifier field in the user field, where the third identification information may indicate the second communication apparatus.

A position of the third identification information in the PPDU is the same as the position of the first identification information in the PPDU. For a manner of setting the third identification information, refer to the manner of setting the first identification information in FIG. 9. Details are not described again.

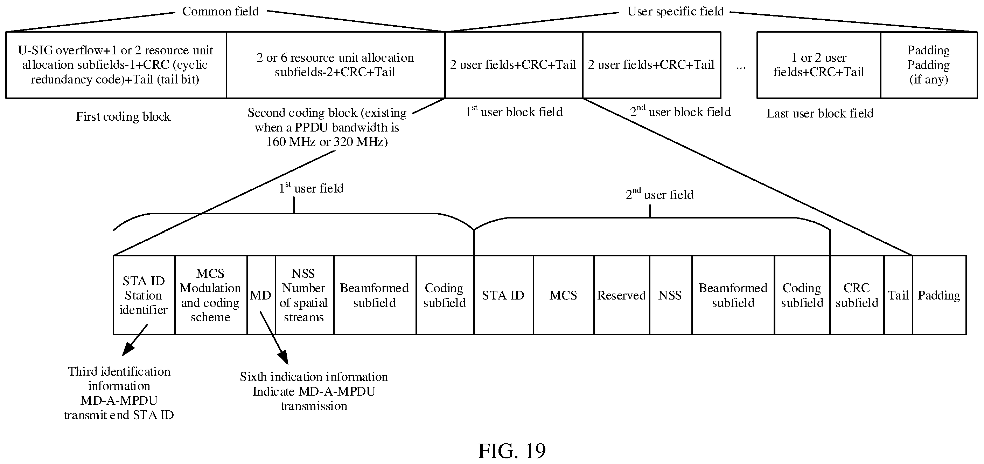

For example, as shown in FIG. 19, the third identification information may be identification information of the second communication apparatus, for example, the second communication apparatus is a STA or a relay serving as a STA. In this case, identification information (for example, the AID) of the STA is carried in the station identifier field in the user field in the first signal field of the PPDU.

Optionally, in other downlink transmission (for example, the MU-MIMO transmission), the identification information (for example, the STA ID) of the destination communication apparatus (or the destination receiving) is usually carried in the station identifier field. Therefore, in another implementation of the PPDU, whether the transmission is the MD-A-MPDU transmission or other transmission needs to be distinguished. To be specific, the PPDU may include sixth indication information, and the sixth indication information may indicate that transmission of the PPDU is the MD-A-MPDU transmission.

For example, in the second signal field, the sixth indication information may be carried in a PPDU type and compressed mode field, to indicate that the transmission is the MD-A-MPDU transmission. This case is usually applicable to single-user transmission, and there is only one transmission type.

In still another example, at least 1 bit may be used to separately indicate whether the transmission is the MD-A-MPDU transmission. The sixth indication information of the at least 1 bit may be located in the second signal field of the PPDU; or is located in the common field in the first signal field of the PPDU; or is located in each user field in the first signal field, and perform separate indication for each user; or is located in the resource unit allocation subfield of the PPDU. For related descriptions, refer to the description of the fourth indication information in FIG. 9. Details are not described again.

In yet another example, some implicit indication methods may be used. For example, if the third identification information is repeated (for example, the PPDU may include a plurality of pieces of third identification information, and the plurality of pieces of third identification information may be located in different user fields of the PPDU), it indicates the MD-A-MPDU transmission; or the sixth indication information is indicated by using reserved entries or special entries (for example, an entry corresponding to the MCS field indicated as 14 or 15) of some fields; or the sixth indication information is indicated by using special entries of different resource unit allocation subfields. This is not limited.

Optionally, the PPDU may further include fifth indication information, where the fifth indication information indicates an AP to parse the MD-A-MPDU, and a STA not to parse the MD-A-MPDU; or the fifth indication information indicates an AP not to parse the MD-A-MPDU, and a STA to parse the MD-A-MPDU; or the fifth indication information indicates an AP and a STA to parse the MD-A-MPDU.

For descriptions of the fifth indication information, refer to the related descriptions of the fifth indication information in FIG. 9. Details are not described again.

Based on the second implementation of the PPDU, in the OFDMA transmission scenario, if new signaling (for example, the third identification information and the sixth indication information) needs to be designed for the MD-A-MPDU transmission, a prerequisite is that all receiving communication apparatuses know that the transmission is the MD-A-MPDU transmission. Further, the third identification information of the transmitting communication apparatus in the MD-A-MPDU transmission may be considered as special first identification information. In this method, a communication apparatus group does not need to be specially constructed in advance for the MD-A-MPDU transmission, and the destination communication apparatus considers that the transmitted MD-A-MPDU needs to be received by only knowing that the destination communication apparatus may need to receive the data of the transmitting communication apparatus.

In the second implementation of the PPDU, when the sixth indication information indicates that transmission of the PPDU is the MD-A-MPDU transmission, the identification information (namely, the third identification information) of the transmitting communication apparatus is carried in the first signal field. This can help the receiving communication apparatus identify whether the receiving communication apparatus may be the destination communication apparatus of the transmitted MD-A-MPDU. In addition, similar to the method shown in FIG. 9, the second identification information may be further carried, to accurately determine whether a receiving communication apparatus is the destination communication apparatus of the transmitted MD-A-MPDU.

Optionally, different from the two PPDUs in which the related signaling information (for example, the first identification information, the second identification information, the third identification information, and the indication information) of the MD-A-MPDU transmission is carried in the first signal field, in a third implementation of the PPDU, the PPDU may include an MD-A-MPDU, and the related signaling information of the MD-A-MPDU transmission may be carried in an MPDU in the MD-A-MPDU, to help the receiving communication apparatus identify whether the receiving communication apparatus is the destination communication apparatus.

For example, the MD-A-MPDU in the PPDU may include a first MPDU. As shown in Table 4, the first MPDU may include one or more of the following information: the first identification information, the one or more pieces of second identification information, start position information of an MPDU associated with each destination communication apparatus associated with the MD-A-MPDU, and end position information of the MPDU associated with each destination communication apparatus.

**Table 4**

| Subfield | Meaning |
|---|---|
| First identification information (for example, MD-A-MPDU group ID) | Indicate a destination communication apparatus group associated with the MD-A-MPDU, for example, may be the MD-A-MPDU group ID |
| Second identification information (For example, STA ID, EID, or bitmap) | Indicate a destination communication apparatus associated with the MD-A-MPDU, for example, may be identification information (for example, the STA ID) of the destination communication apparatus; or may be identification information (for example, the EID) of the destination communication apparatus in the destination communication apparatus group; or may be the bitmap (for example, the bitmap or an EID bitmap), where the bitmap indicates whether a communication apparatus in the destination communication apparatus group is the destination communication apparatus |
| Start position information an MPDU associated with each destination communication apparatus associated with the MD-A-MPDU (for example, start position information of a STA K MPDU) | Indicate a start position of the MPDU associated with the destination communication apparatus, for example, may include one or more of the following: a sequence number of a start MPDU in an A-MPDU in which the start MPDU is located, a sequence number of the start MPDU, a sequence number of an OFDM symbol on which first bit information of the start MPDU is located, a sequence number of an LDPC encoded codeword in which the first bit information of the start MPDU is located, and the like |
| End position information of the MPDU associated with each destination communication apparatus associated with the MD-A-MPDU (for example, end position information of the STA K MPDU) | Indicate an end position of the MPDU associated with the destination communication apparatus, for example, may include one or more of the following: a sequence number of an end MPDU in an A-MPDU in which the end MPDU is located, a sequence number of the end MPDU, a sequence number of an OFDM symbol on which first bit information of the end MPDU is located, a sequence number of an LDPC encoded codeword in which the first bit information of the end MPDU is located, and the like |

When the first MPDU includes the start position information of the MPDU associated with each destination communication apparatus associated with the MD-A-MPDU, and the end position information of the MPDU associated with each destination communication apparatus, the destination communication apparatus can identify a position of an MPDU corresponding to the destination communication apparatus, and does not need to always demodulate all MPDUs. This reduces the power consumption and saves the energy.

Optionally, the MD-A-MPDU in the PPDU may include one or more first MPDUs.

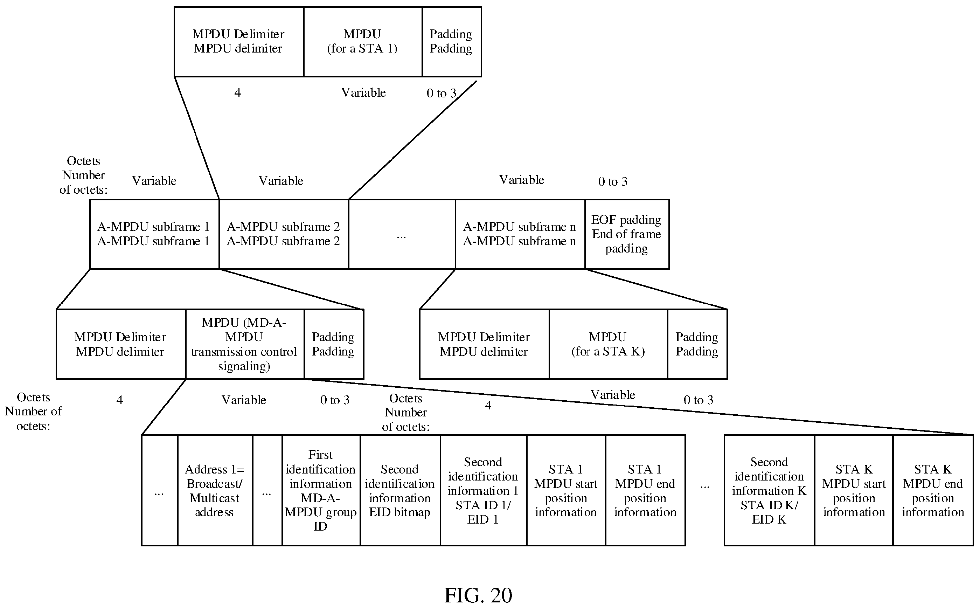

For example, as shown in FIG. 20, the first MPDU is an A-MPDU subframe 1 in the MD-A-MPDU. The MPDU in the A-MPDU subframe 1 may include the one or more information in Table 4.

Optionally, when the information shown in Table 4 occupies a small number of bits, the information may alternatively be carried in each MPDU. To be specific, each MPDU may include one or more of the following: the first identification information, the one or more pieces of second identification information, the start position information of the MPDU, and the end position information of the MPDU.

For example, the information shown in Table 4 may be carried in an A-control variant of an HT control field of the MPDU.

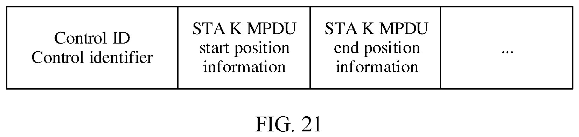

For example, as shown in FIG. 21, a STA K MPDU is used as an example. An A-control variant field of the STA K MPDU may include a control identifier, start position information of the MPDU, and end position information of the MPDU.

Based on the third implementation of the PPDU, the related signaling information of the MD-A-MPDU transmission is carried in the MPDU, so that more indication information can be provided more flexibly. It may be understood that the information may alternatively be carried in the signal field at the physical layer, and is applied to the PPDU shown in FIG. 9 or the second implementation of the PPDU. For the physical layer, overheads are high, and a length changes greatly.

Optionally, an embodiment of this application further provides a communication method used when MD-A-MPDU transmission is used for preemption transmission. A second communication apparatus may generate a PPDU, and send the PPDU to a first communication apparatus and a third communication apparatus, where the PPDU may include an MD-A-MPDU, the MD-A-MPDU may include an MPDU associated with the first communication apparatus and an MPDU associated with the third communication apparatus, the MPDU associated with the first communication apparatus may include seventh indication information, and the seventh indication information may indicate, after transmission of the MPDU of the first communication apparatus is interrupted, whether to continue the transmission of the MPDU of the first communication apparatus in the PPDU. When receiving the PPDU, the first communication apparatus may determine, based on the seventh indication information, whether to continue to receive, by using the PPDU, the MPDU associated with the first communication apparatus.

If the seventh indication information indicates that after the transmission of the MPDU of the first communication apparatus is interrupted, the transmission of the MPDU of the first communication apparatus is continued in the PPDU, the first communication apparatus may continue to receive the MPDU by using the PPDU, and determine whether the received MPDU is an MPDU corresponding to the first communication apparatus. If the seventh indication information indicates that after the transmission of the MPDU of the first communication apparatus is interrupted, the transmission of the MPDU of the first communication apparatus is not continued in the PPDU, the first communication apparatus may, in advance, stop receiving, to reduce power consumption and save energy.

When generating the PPDU, the second communication apparatus may not generate the PPDU including the MPDU associated with the first communication apparatus and the MPDU associated with the third communication apparatus at the beginning, but temporarily insert the MPDU of the third communication apparatus into the MD-A-MPDU of the PPDU when there is a more urgent service (for example, a service of the third communication apparatus).

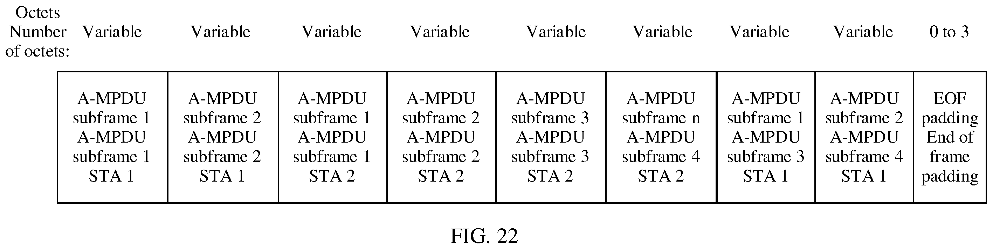

For example, as shown in FIG. 22, in an initial RU or MRU, an AP (namely, the second communication apparatus) is sending an MPDU (for example, an A-MPDU subframe 1 and an A-MPDU subframe 2 of a STA 1) to the STA 1 (namely, the first communication apparatus). If a service with a higher priority for a STA 2 (namely, the third communication apparatus) is suddenly generated in the queue, the AP may switch to send an MPDU with a higher priority (for example, an A-MPDU subframe 1, an A-MPDU subframe 2, an A-MPDU subframe 3, and an A-MPDU subframe 4 of the STA 2) to the STA 2 given that the MD-A-MDPU may be multiplexed in time.

Because the service of the STA 1 is suddenly terminated, whether to continue the transmission in the same PPDU subsequently affects whether the STA 1 needs to continue receiving. As a result, energy saving is affected. The seventh indication information is carried in the MPDU associated with the first communication apparatus, to indicate whether the transmission of the STA 1 is continued in the same PPDU subsequently after preemption occurs and the service of the STA 1 is suddenly terminated. For example, a value 1 of the seventh indication information indicates that no transmission is continued, and a value 0 of the seventh indication information indicates that the transmission is continued, and vice versa.

Optionally, an EOF subfield in the MPDU may be reused to indicate the seventh indication information.

In this embodiment of this application, when MPDUs of a receiving communication apparatus are discontiguous, for example, when preemption occurs, the seventh indication information may be used to help the receiving communication apparatus determine whether to continue to read the MD-A-MPDU, to help the communication apparatus save energy.

It should be noted that the methods provided in embodiments of this application may be implemented separately, or may be implemented in combination. This is not limited.

It may be understood that an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used.

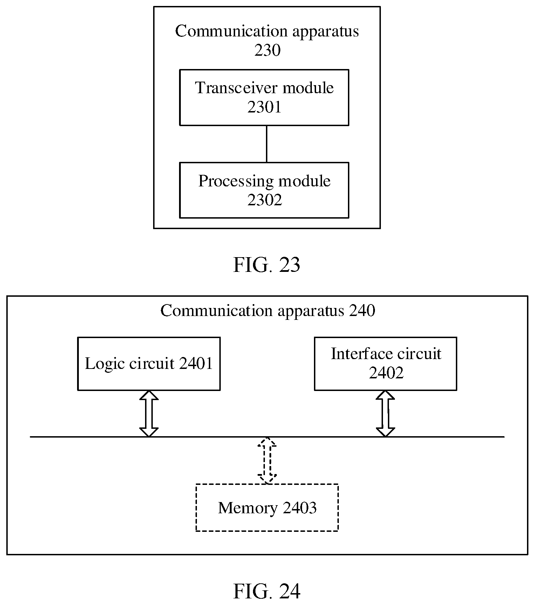

When each functional module is obtained through division based on each corresponding function, FIG. 23 shows a communication apparatus 230. The communication apparatus 230 may perform actions performed by the first communication apparatus in FIG. 9 to FIG. 22, or perform actions performed by the second communication apparatus in FIG. 9 to FIG. 22.

The communication apparatus 230 may include a transceiver module 2301 and a processing module 2302. For example, the communication apparatus 230 may be a communication device, or may be a chip used in the communication device, or another combined device or component that has a function of the communication apparatus. When the communication apparatus 230 is the communication device, the transceiver module 2301 may be a transceiver, where the transceiver may include an antenna, a radio frequency circuit, and the like; and the processing module 2302 may be a processor (or a processing circuit), for example, a baseband processor, where the baseband processor may include one or more CPUs. When the communication apparatus 230 is a component that has a function of the communication apparatus, the transceiver module 2301 may be a radio frequency unit, and the processing module 2302 may be a processor (or a processing circuit), for example, a baseband processor. When the communication apparatus 230 is a chip system, the transceiver module 2301 may be an input/output interface of a chip (for example, a baseband chip), and the processing module 2302 may be a processor (or a processing circuit) of the chip system and may include one or more central processing units. It should be understood that the transceiver module 2301 in this embodiment of this application may be implemented by a transceiver or a transceiver-related circuit component, and the processing module 2302 may be implemented by a processor or a processor-related circuit component (or referred to as a processing circuit).

For example, the transceiver module 2301 may be configured to perform all sending and receiving operations performed by the communication apparatus in the embodiments shown in FIG. 9 to FIG. 22, and/or configured to support another process of the technology described in this specification. The processing module 2302 may be configured to perform all operations other than sending and receiving operations performed by the communication apparatus in the embodiments shown in FIG. 9 to FIG. 22, and/or configured to support another process of the technology described in this specification.

In still another possible implementation, the transceiver module 2301 in FIG. 23 may be replaced with a transceiver, and a function of the transceiver module 2301 may be integrated into the transceiver. The processing module 2302 may be replaced with a processor, and a function of the processing module 2302 may be integrated into the processor. Further, the communication apparatus 230 shown in FIG. 23 may further include a memory.

Alternatively, when the processing module 2302 is replaced with a processor, and the transceiver module 2301 is replaced with a transceiver, the communication apparatus 230 in this embodiment of this application may be a communication apparatus 240 shown in FIG. 24. The processor may be a logic circuit 2401, and the transceiver may be an interface circuit 2402. Further, as shown in FIG. 24, the communication apparatus 240 may further include a memory 2403.

An embodiment of this application further provides a computer program product. When the computer program product is executed by a computer, functions in any one of the foregoing method embodiments may be implemented.

An embodiment of this application further provides a computer program. When the computer program is executed by a computer, functions in any one of the foregoing method embodiments may be implemented.

Embodiments of this application further provide a computer-readable storage medium. All or some of the procedures in the foregoing method embodiments may be completed by a computer program instructing related hardware. The program may be stored in the foregoing computer-readable storage medium. When the program is executed, the procedures in the foregoing method embodiments may be included. The computer-readable storage medium may be an internal storage unit in the terminal in any one of the foregoing embodiments (including a data transmitting and/or a data receiving), for example, a hard disk drive or memory of the terminal. The foregoing computer-readable storage medium may alternatively be an external storage device of the terminal, for example, a plug-in hard disk drive, a smart media card (smart media card, SMC), a secure digital (secure digital, SD) card, and a flash card (flash card) that are configured on the terminal. Further, the computer-readable storage medium may further include both an internal storage unit and an external storage device of the terminal. The computer-readable storage medium is configured to store the computer program and other programs and data required by the terminal. The computer-readable storage medium may be further configured to temporarily store data that has been output or is to be output.

It should be noted that, in the specification, claims, and accompanying drawings of this application, terms such as "first" and "second" are intended to distinguish between different objects but do not indicate a particular order. "First" and "second" are merely intended for description, and shall not be understood as an indication or implication of relative importance or implicit indication of a number of indicated technical features. Therefore, a feature limited by "first" or "second" may explicitly or implicitly include one or more features. In the description of embodiments, unless otherwise specified, "a plurality of" means two or more.

In addition, terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more. "A plurality of" means two or more. "At least two (items)" means two, three, or more. A term "and/or" describes only an association relationship between associated objects and indicates that three relationships may exist. For example, "A and/or B" may indicate the following three cases: Only A exists, only B exists, and both A and B exist, where A and B may be singular or plural. A character "/" usually indicates an "or" relationship between the associated objects. "At least one of the following items (pieces)" or a similar expression thereof means any combination of the items, and includes a single item (piece) or any combination of a plurality of items (pieces). For example, at least one of a, b, or c, or at least one of a, b, and c may indicate: a, b, c, "a and b", "a and c", "b and c", or "a, b, and c", where a, b, and c may be singular, or may be plural. Both "when" and "if" mean that corresponding processing is performed in an objective case, but are not intended to limit time. In addition, the terms do not necessarily mean that a determining action is performed during implementation, and do not mean another limitation either.

In addition, in embodiments of this application, a word "example", "for example", or the like indicates giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner for ease of understanding.

The foregoing descriptions about implementations allow a person skilled in the art to clearly understand that, for the purpose of convenient and brief description, division into the functional modules is used as an example for description. In actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate components may or may not be physically separate, and component displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of embodiments of this application essentially or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

## Claims

1. A communication method, comprising:
receiving, by a first communication apparatus, a physical layer protocol data unit PPDU from a second communication apparatus, wherein the PPDU comprises first identification information and a multi-destination aggregated medium access control protocol data unit MD-A-MPDU, the first identification information indicates a destination communication apparatus group associated with the MD-A-MPDU, and a number of bits occupied by the first identification information is 11; and
parsing, by the first communication apparatus, the PPDU.

2. A communication method, comprising:
generating, by a second communication apparatus, a physical layer protocol data unit PPDU; and
sending, by the second communication apparatus, the PPDU to a first communication apparatus, wherein
the PPDU comprises first identification information and a multi-destination aggregated medium access control protocol data unit MD-A-MPDU, the first identification information indicates a destination communication apparatus group associated with the MD-A-MPDU, and a number of bits occupied by the first identification information is 11.

3. The method according to claim 1 or 2, wherein
the first identification information is located in a user field in a first signal SIG field comprised in the PPDU.

4. The method according to any one of claims 1 to 3, wherein
the PPDU further comprises one or more pieces of second identification information, wherein the second identification information indicates a destination communication apparatus associated with the MD-A-MPDU.

5. The method according to claim 4, wherein
the second identification information is located in the user field in the first signal SIG field comprised in the PPDU.

6. The method according to claim 4 or 5, wherein
the PPDU further comprises first indication information and second indication information, wherein the first indication information indicates that the PPDU is used for single-user transmission, and the second indication information indicates that the PPDU is used for single-user MD-A-MPDU transmission.

7. The method according to any one of claims 4 to 6, wherein
the second identification information is identification information of the destination communication apparatus, or
the second identification information is identification information of the destination communication apparatus in the destination communication apparatus group, or
the second identification information is a bitmap, wherein the bitmap indicates whether a communication apparatus in the destination communication apparatus group is the destination communication apparatus.

8. The method according to any one of claims 1 to 3, wherein
the PPDU further comprises third indication information and fourth indication information, wherein the third indication information is located in a resource unit RU allocation subfield, the third indication information indicates that there is more than one user field in an RU or multiple resource units MRU on which the MD-A-MPDU is transmitted, the fourth indication information is located in the user field in the first signal SIG field comprised in the PPDU, and the fourth indication information indicates that transmission in an RU or an MRU associated with the user field is MD-A-MPDU transmission.

9. The method according to claim 8, wherein
the user field comprises a modulation and coding scheme MCS field, and if a value of the MCS field is a first value, the MCS field is the fourth indication information.

10. The method according to any one of claims 1 to 3, wherein
the PPDU comprises a plurality of pieces of first identification information, wherein the plurality of pieces of first identification information are located in different user fields.

11. The method according to any one of claims 8 to 10, wherein the method further comprises:
if a value of the RU allocation subfield of the PPDU is a second value, the RU allocation subfield indicates that an RU or an MRU associated with the RU allocation subfield is the MD-A-MPDU transmission.

12. The method according to any one of claims 1 to 11, wherein the method further comprises:
the PPDU further comprises fifth indication information, wherein the fifth indication information indicates an access point AP to parse the MD-A-MPDU, and a station STA not to parse the MD-A-MPDU; or the fifth indication information indicates an AP not to parse the MD-A-MPDU, and a STA to parse the MD-A-MPDU; or the fifth indication information indicates an AP and a STA to parse the MD-A-MPDU.

13. The method according to claim 12, wherein
the fifth indication information is located in a second signal SIG field of the PPDU.

14. A communication apparatus, comprising:
a transceiver module, configured to receive a physical layer protocol data unit PPDU from a second communication apparatus, wherein the PPDU comprises first identification information and a multi-destination aggregated medium access control protocol data unit MD-A-MPDU, the first identification information indicates a destination communication apparatus group associated with the MD-A-MPDU, and a number of bits occupied by the first identification information is 11; and
a processing module, configured to parse the PPDU.

15. A communication apparatus, comprising:
a processing module, configured to generate a physical layer protocol data unit PPDU; and
a transceiver module, configured to send the PPDU to a first communication apparatus, wherein
the PPDU comprises first identification information and a multi-destination aggregated medium access control protocol data unit MD-A-MPDU, the first identification information indicates a destination communication apparatus group associated with the MD-A-MPDU, and a number of bits occupied by the first identification information is 11.

16. A communication apparatus, wherein the communication apparatus comprises a processor, and the processor is configured to run a computer program or instructions, to enable the communication apparatus to perform the communication method according to claim 1 and any one of claims 3 to 13, or the communication method according to any one of claims 2 to 13.

17. A computer-readable storage medium, wherein the computer-readable storage medium stores computer instructions or a program, and when the computer instructions or the program is run on a computer, the communication method according to claim 1 and any one of claims 3 to 13, or the communication method according to any one of claims 2 to 13 is performed.

18. A computer program product, wherein the computer program product comprises computer instructions, and when some or all of the computer instructions are run on a computer, the communication method according to claim 1 and any one of claims 3 to 13, or the communication method according to any one of claims 2 to 13 is performed.
